(19) **Europäisches Patentamt**

**European Patent Office**

**Office européen des brevets**

(11) **EP 1 362 899 B1**

(12) **EUROPEAN PATENT SPECIFICATION**

(45) Date of publication and mention
of the grant of the patent:
**05.07.2006 Bulletin 2006/27**

(51) Int Cl.:
*C09D 5/03* (2006.01)  *C09D 5/46* (2006.01)
*B05D 1/06* (2006.01)  *C09D 133/14* (2006.01)
*C09D 133/06* (2006.01)

(21) Application number: **03010186.9**

(22) Date of filing: **06.05.2003**

(54) **Thermosetting powder coating composition, method for forming coating film of the composition, and coating film**

Wärmehärtende Pulverbeschichtungszusammensetzung, Verfahren zur Herstellung eines Beschichtungsfilms mit der Zusammensetzung und Beschichtungsfilm

Composition de revêtement en poudre thermodurcissable, procédé de préparation d'un film de revêtement avec celle-ci, et un film de revêtement

(84) Designated Contracting States:
**DE FR GB IT**

(30) Priority: **07.05.2002 JP 2002131999**

(43) Date of publication of application:
**19.11.2003 Bulletin 2003/47**

(73) Proprietor: **Mitsui Chemicals, Inc.
Tokyo (JP)**

(72) Inventors:
• **Mizoguchi, Mitsuyuki,
c/o Mitsui Chem., Inc.
Sodegaura-shi,
Chiba (JP)**

• **Asami, Keiichi,
c/o Mitsui Chem., Inc.
Sodegaura-shi,
Chiba (JP)**
• **Hirose, Yoshiharu
Ichihara-shi, Chiba (JP)**

(74) Representative: **Strehl Schübel-Hopf & Partner
Maximilianstrasse 54
80538 München (DE)**

(56) References cited:
**EP-A- 0 509 393**  **EP-A- 0 696 622**
**EP-A- 0 897 962**  **EP-A- 1 176 175**

EP 1 362 899 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a thermosetting powder coating composition, which undergoes thermal curing reaction to form a crosslinked cured film excellent in appearance (smoothness, gloss, transparency, etc.), physical properties (hardness, scratch/mar resistance, etc.) and chemical properties (acid resistance, solvent resistance, etc.) and is capable of providing a baked film favorable for coating of automotive bodies and automotive parts. More particularly, the present invention relates to a thermosetting powder coating composition whose transparent (clear) coating film substantially containing no pigment for coloration can exhibit the above-mentioned excellent properties even in case of a thin film of not more than 50 microns.

Thermosetting powder coatings are environmentally friendly paints with extremely small quantity of solvent emission, and their market has been extended particularly in Europe and the U.S. where the VOC (Volatile Organic Compound) emission is strictly regulated.

Such thermosetting powder coatings have an advantage in coating productivity that a coating film of increased film thickness can be obtained by one shot of spraying as compared with water-borne paints or solvent-borne paints, but the reduction of film thickness aiming at decrease of the material cost has its limits. The reason is that the coatings do not contain thinners or volatile components which promote smoothing of film surface in the baking process. One of their applications which require reduction of film thickness most strongly is automotive top clear coating. The top clear coating film is a transparent (clear) coating film for constituting the outermost layer of plural coating films of an automobile, and fulfills its important function for both purposes of ensuring of design and surface protection. The solvent-borne acrylic clear paint that is the main stream of the top clear coatings at present produces sufficient smoothness in the standard film thickness of 35 to 40 $\mu$m. On the other hand, regarding the thermosetting acrylic powder clear coating that is in embryo at present, it is said that in order to form a crosslinked cured film having the same smoothness, a film thickness of at least 50 to 65 $\mu$m is necessary. Therefore, it is a very important and urgent problem to reduce the minimum film thickness to not more than 50 $\mu$m, particularly 35 to 40 $\mu$m, from the viewpoint of the material cost of the coatings.

The approaches, which have heretofore been made for the reduction of film thickness finally aiming at a film thickness of 35 to 40 $\mu$m that is a standard film thickness of the solvent-borne acrylic clear paints, are broadly divided into the following three categories.

The first approach is to reduce the paint particle size by mechanical pulverization. In general, however, this is accompanied by deterioration of powder flowability, defects (spits) of the film surface due to coagulation, and increase of load of recycling of the coatings attributable to deterioration of the transfer efficiency in the electrostatic spray coating. To solve these problems, there have been proposed, for example, a method of removing fine powder or coarse powder to ensure an appropriate particle size distribution (Japanese Patent Laid-Open Publication No. 231446/1998) and a method of mixing a hydrophobic silica powder to improve powder flowability (DE19712765).

The second approach is to make paint particles spherical. There have been studied, for example, formation of semi-spherical particles by abrasion pulverization (Japanese Patent Laid-Open Publication No. 209033/1996, Japanese Patent Laid-Open Publication No. 100414/1997) and formation of spherical particles by suspending a molten thermosetting powder coating composition in a specific medium (EP1055694).

The above two approaches are both accompanied by large alteration in the production process of the coating particles and can be hardly said as successful in the practical level.

The third approach is to reduce the film thickness by controlling the coating formulation and thereby controlling melting or curing properties. For example, there is a method wherein the thermal curing reaction rate is reduced by using not GMA but $\beta$-methyl glycidyl methacryalte copolymer ($\beta$-methyl GMA) to design a long flow time of the coating and thereby promote smoothing of the coating film, as disclosed in Japanese Patent Laid-Open Publication No. 140379/1999. In this publication, there is a description of pellet flow as one parameter for designing of coatings, which aims at improvement of appearance and gloss of the coating film. As can be seen in this example, it is general that, with regard to the control of the coating formulation, a process of melting of coating particles → smoothing in a flow state → appearance of strength of the coating film by thermal curing is discussed using viscosity or flowability of the coating in a molten state as parameters. Also in the case where excellent smoothness is aimed at in an extremely reduced film thickness as in the present invention, how to increase flowability of the coating in a molten state without excessively slowing down the thermal curing reaction should be considered.

Another example of the parameter for designing of coatings, which numerically expresses the melting and curing behaviors of the powder coatings similarly to the above pellet flow, is described in US-5663240. In detail, the upper limit of the minimum value of the absolute value of a complex elastic modulus ($\eta^*$) is defined, and at the same time, a gel time of the powder coatings is used. Further, in "Colorants", 74[11], 546-550, (2001), there are descriptions of a value "Melt Flow Index" which correspond to the integrated value of the absolute value of a complex elastic modulus ($\eta^*$) with the baking time, and both of the viscosity and the baking time, at which the coatings are flowable, are used as parameters for designing for aiming at better smoothing. In Japanese Patent Laid-Open Publication No. 275420/2002, there are descriptions of the minimum value of the absolute value of a complex elastic modulus ($\eta^*$) and the lower limit of the time at which the coatings are flowable. Particularly, Japanese Patent Laid-Open Publication No. 275420/2002 shows a technical idea that the melting and curing properties of the thermosetting powder coatings are defined by only parameters for coating designing, that is, a technical idea of so-called parameter limitation, and it is a matter of great forerunning significance.

In the preceding techniques to control the melting and curing properties by the coating formulation, however, there has not been completed any designing of coating formulation to reproduce sufficient film smoothness in the film thickness of extremely low level such as a film thickness of not more than 50 $\mu$m that is a target of the present invention, particularly a film thickness of 35 to 40 $\mu$m that is a standard film thickness of the solvent-borne top clear film, without excessively slowing down the thermal curing reaction. Further, melting and curing properties of such super-high-flow powder coatings and parameters sufficient for defining requisites of the melting and curing properties have not been completed either.

EP 897962 A1 discloses a thermosetting powder paint composition for top coating, comprising an acrylic copolymer (A) having an epoxy group, and an organic modified polysiloxane (B) which comprises at least one fuctional group, at least two silicon atoms and no radical-polymerizable unsaturated bond.

EP 509393A1 discloses a powder coating composition comprising:(A) a copolymer containing glycidyl groups, (B) an aliphatic or alicyclic dibasic acid, an anhydride thereof or a polyol-modified anhydride of a dibasic acid, and (C) optionally pigments and other additives, wherein the copolymer (A) has a molecular weight (Mn) of 1,000-10,000 and a glass transition temperature of 30-90°C, and is a copolymer of a) at least 20% by weight of glycidyl acrylate or glycidyl methacrylate, b) 35-50% by weight of styrene, c) 10-45% by weight of one or more alkyl esters of aliphatic, unsaturated mono- or dicarboxylic acids, and d) 0-50% by weight of one or more olefinically unsaturated monomers.

EP 1176175 A2 discloses a powder coating composition comprising a glycidyl methacrylate resin, dicarboxylic acid cross-linked agents, a catalyst selected from the group consisting of phosphines, ammonium, 2-phenyl-2-imidazoline, substituted imidazole and isopropyl imidazole Bis-A epoxy resin adduct and a matte texturing agent.

The present invention is intended to solve such problems as mentioned above, and it is an object of the present invention to provide an automotive top clear thermosetting powder coating composition capable of attaining reduction of film thickness of a powder coating film only by the aforesaid third approach, namely, only by the control of the coating formulation, and providing a coating film having sufficient smoothness even in the film thickness level of 35 to 50 $\mu$m. It is another object of the invention to complete parameters for designing of coatings as the requisites to ensure excellent smoothness in such extremely thin film level with keeping physical properties and chemical properties of the crosslinked cured film enough for the practical use and to numerically express the parameters.

The present inventors have paid attention to the fact that a thermosetting powder coating composition of a specific formulation has a specifically high rate of viscosity decrease in its melting process, and using, as a new parameter for designing, a period of time required for decrease of the absolute value of a complex elastic modulus ($\eta^*$) that has not been discussed so far, they have defined requisites for sufficient film smoothness in the film thickness range of 35 to 50 $\mu$m. Further, the present inventors have found that appearance, physical properties and chemical properties sufficient for an automotive top clear film can be kept even in the above-mentioned thin film level without excessively slowing down the thermal curing reaction of the thermosetting powder coating composition. Based on the finding, the present invention has been accomplished.

That is to say, the thermosetting powder coating composition of the present invention is a thermosetting powder coating composition containing, as essential constituents, an acrylic copolymer component (A), which is solid at ambient temperature, has a functional group capable of undergoing thermal curing reaction and has a weight-average molecular weight Mw of not less than 2500 and a design Tg, as determined by the Fox's formula, of not lower than 50°C, and a curative component (B), which has a functional group other than the functional group of the acrylic copolymer component (A) and capable of undergoing thermal curing reaction with the functional group of the component (A), wherein the time $\Delta T$ required for decrease of the absolute value of a complex elastic modulus ($\eta^*$) of said composition from 100000 Pa·s to 5 Pa·s is not more than 200 seconds, said absolute value of a complex elastic modulus being measured by a dynamic viscoelasticity measuring device under the conditions of a heating rate of 10°C/min, a heating starting temperature of 60°C, a heating finish temperature of 150°C, a plate of a parallel plate having a diameter of 20 mm, a distance between plates of 1 mm and a frequency of 1 Hz.

In the thermosetting powder coating composition, the acrylic copolymer component (A) having a functional group is obtained by copolymerizing 10 to 40 parts by weight of styrene (A-1) as an essential component, 30 to 60 parts by weight of glycidyl methacrylate and/or $\beta$-methyl glycidyl methacrylate (A-2) as an essential component, at least one monomer selected from 0 to 50 parts by weight of isobutyl methacrylate (A-3), 0 to 50 parts by weight of cyclohexyl methacrylate (A-4), 0 to 45 parts by weight of isobornyl methacrylate (A-5), 0 to 40 parts by weight of isobornyl acrylate (A-6) and 0 to 20 parts by weight of methyl methacrylate (A-7), as another ethylenically unsaturated monomer, and 0 to 5 parts by weight of an ethylenically unsaturated monomer (A-8) other than the above monomers, with the proviso that the total amount of the components (A-1) to (A-8) is 100 parts by weight, the curative component (B) is dodecanedioic acid linear polyacid anhydride or tetradecanedioic acid linear polyacid anhydride, which is obtained by intermolecular dehydrocondensation of a dibasic acid prepared from a normal paraffin mixture mainly containing a fraction of 12 carbon atoms or a fraction of 14 carbon atoms respectively through a fermentation process and containing not less than 90% by weight of a linear aliphatic dibasic acid of the corresponding number of carbon atoms, and which has a residual nitrogen concentration of not more than 150 ppm and an ash concentration of not more than 1000 ppm, and an acid group (b) in the curative component (B) is contained in excess to a (β-methyl)glycidyl group (a) in the copolymer component (A) in a molar ratio ((b)/(a)) of 1.05-1.3/1.0.

In the thermosetting powder coating composition, a part of (β-methyl)glycidyl groups of the acrylic copolymer component (A) have been previously graft-modified with rosin (C) having a carboxyl group and having a melting point of not lower than 45°C in such a manner that the weight ratio of the rosin (C) to the acrylic copolymer component (A) becomes 0.01 to 3%.

The thermosetting powder coating composition can form a crosslinked cured transparent (clear) film through a method comprising formulating the thermosetting powder coating composition as a composition substantially containing no pigment for coloration in order not to impair transparency, mechanically pulverizing the composition to prepare non-spherical indefinite-shaped particles having a volume average particle diameter of not less than 18 μm, and subjecting the particles to heating and baking.

The crosslinked cured film obtained by the above method becomes an automotive top clear powder coating film substantially formed by thermal curing reaction of glycidyl group with acid group and has a smoothness Lw value, which is a long wavelength value measured by a measuring machine "Ware Scan Plus" manufactured by BYK Gardener on the portion having a film thickness of not more than 50 μm, of not more than 4.0

## DETAILED DESCRIPTION OF THE INVENTION

The thermosetting powder coating composition according to the invention is described in detail hereinafter.

Thermosetting powder coating composition

The thermosetting powder coating composition according to the invention contains the following functional group-containing acrylic copolymer component (A) and the curative component (B) which is capable of undergoing thermal curing reaction with the functional group of the resin component (A), and the time ΔT required for decrease of the absolute value of a complex elastic modulus (η*) of this composition from 100000 Pa·s to 5 Pa·s is not more than 200 seconds, said absolute value of a complex elastic modulus (η*) being measured by a dynamic viscoelasticity measuring device (Haake RheoStress/RS75 model etc.) under the following conditions. When the time ΔT is not more than 200 seconds, a crosslinked cured film having sufficient smoothness (e.g., Lw value=4.0 or less) even in a film thickness of not more than 50 μm is formed by powder coating of the thermosetting powder coating composition, particularly by powder top coating of the composition. In more detail, when the time ΔT is not more than 200 seconds, smoothness of a Lw value of not more than 4.0 can be stably reproduced in a thickness of not more than 50 μm, and when the time ΔT is not more than 180 seconds, smoothness of a Lw value of not more than 4.0 can be stably reproduced in a thickness of not more than 40 μm, except the case where the undercoating markedly impairs smoothness of the powder top coating film, for example, powder top coating is made on an under coating film of extremely coarse surface or on an under coating film containing a very high concentration of residual volatile components.

The factors to determine the time ΔT required for decrease of the absolute value of a complex elastic modulus (η*) of the thermosetting powder coating composition from 100000 Pa·s to 5 Pa·s are, for example, the types and the copolymerization composition ratio (or monomer composition ratio) of the ethylenically unsaturated monomers constituting the functional group-containing acrylic copolymer (A), the molecular weight (ex. weight average molecular weight Mw) thereof, the solubility parameter SP thereof, the glass transition temperature Tg thereof, the type of the curative component (B), the degree of condensation thereof, the melting point thereof, and the ratio between the functional group in the component (A) and the functional group in the component (B). Therefore, in order to set the time ΔT required for decrease of the absolute value of a complex elastic modulus (η*) of the thermosetting powder coating composition from 100000 Pa·s to 5 Pa·s in the above range, the functional group-containing acrylic copolymer component (A) obtained by copolymerization of the following monomers in the following ratio and the following curative component (B) are used in combination in the prescribed ratio.

Conditions for measuring absolute value of complex elastic modulus (η*) by dynamic viscoelasticity measuring device

Dynamic viscoelasticity measuring device
(manufactured by Haake, model: RheoStress RS75)
Heating rate: 10°C/min
Heating starting temperature: 60°C

Heating finish temperature: 150°C
Plate: parallel plate of 20 mm diameter
Distance between plates: 1 mm
Frequency: 1 Hz

In the present invention, the thermosetting powder coating composition, which has been designed so as to be ultra-high-flowable as described above and exhibits an extremely high rate in decrease of the melt viscosity, incidentally has an extremely minimum value as the lowest value frequently of the absolute value of the complex elastic modulus ($\eta^*$) measured by a dynamic viscoelasticity measuring device. As a matter of course, a thermosetting powder coating composition whose absolute value does not become less than 5.0 Pa·s stably and which is hardly melted is not included in the present invention, as is clear from the range of the absolute value of the complex elastic modulus ($\eta^*$) for calculating the time $\Delta T$. The lowest value of the absolute value of the complex elastic modulus ($\eta^*$) tends to become not more than 2.0 Pa·s when $\Delta T$ is not more than 200 seconds, and it tends to become not more than 1.0 Pa·s when $\Delta T$ is not more than 180 seconds. In order to obtain sufficient film smoothness in the thickness of not more than 40 $\mu$m, the lowest value of the absolute value of the complex elastic modulus ($\eta^*$) is particularly preferably not more than 1.0 Pa·s.

Acrylic copolymer component (A) having functional group

As the powder coating capable of designing the time $\Delta T$ required for decrease of the absolute value of a complex elastic modulus ($\eta^*$) of the thermosetting powder coating composition from 100000 Pa·s to 5 Pa·s in not more than 200 seconds, particularly preferably not more than 180 seconds, a powder coating consisting of glycidyl group-containing acrylic resin is employable.

Design Tg, measured Tg and weight-average molecular weight Mw

In order to shorten, to the utmost, the time to decrease the absolute value of the complex elastic modulus ($\eta^*$) of the powder coating such as a typical acrylic powder coating consisting of glycidyl group-containing acrylic resin in the melting process and thereby ensure sufficient smoothness in the thickness of 35 to 50 $\mu$m, the functional group-containing acrylic copolymer (A) should satisfy two requisites. The first requisite is to lower the glass transition temperature Tg to the limit in the practical use. The term "practical use" relates to a problem of blocking or coagulation of particles of the powder coating, and at least this problem needs to be avoided. The second requisite is to lower the weight-average molecular weight Mw to the limit. In order to satisfy these two requisites, "design Tg" calculated by the Fox's formula described in "Bulletin of the American Physical Society", Series 2, vol. 1, No. 3, pp. 123 and after, (1956) and "measured Tg" actually measured by, for example, DSC (differential scanning calorimeter) need to be properly designed in the present invention. More specifically, the "design Tg" is essentially not lower than 50°C, and the "measured Tg" is preferably not higher than 40°C, more preferably 40 to 35°C. The weight-average molecular weight Mw, which can be measured by gel permeation chromatography (GPC) using polystyrene as a standard, is not less than 2500, preferably 2800 to 5000, particularly preferably 3000 to 4000. Designing of such extremely low Tg and low molecular weight of the acrylic copolymer (A) is very rare in the conventional designing of coating formulation, but it is favorable for the designing of super-high-flow coatings as of the present invention.

If the molecular weight Mw of the functional group-containing acrylic copolymer component (A) is less than 2500, physical properties (hardness, scratch/mar resistance, etc.) and chemical properties (acid resistance, solvent resistance, etc.) of the resulting coating film are deteriorated. If the weight-average molecular weight Mw is near 5000 or larger, the time to decrease the absolute value of the complex elastic modulus ($\eta^*$) cannot be shortened sufficiently, and smoothness of the coating film in the desired thin film level is sometimes impaired. The "design Tg" necessary for obtaining a preferable "measured Tg" in case of such a low molecular weight design is not lower than 50°C. If the "measured Tg" is lower than 35°C, a disadvantage of blocking or coagulation of the coating particles cannot be avoided even if any means that is thinkable in the practical level at present is used in combination. To the contrary, if the "measured Tg" exceeds 40°C, the time to decrease the absolute value of the complex elastic modulus ($\eta^*$) cannot be shortened sufficiently, and smoothness of the coating film in the desired thin film level is sometimes impaired.

Solubility parameter (SP)

In addition to the above-mentioned two requisites of the acrylic copolymer component (A), the third requisite that is most important for the acrylic copolymer component (A) of the present invention is to properly design the range of a "solubility parameter (SP)" determined by calculation in accordance with the Fedors method described in "Polymer Engineering and Science", vol. 14, February issue, pp. 147-154, 1974. That is to say, from the relationship to the below-described curative component (B), the proper range of the "solubility parameter (SP)" needs to be not more than 10.0, preferably not more than 9.3. The lower limit thereof is preferably 8.5 or more. The most simple and easy method to lower the "design SP" of the acrylic copolymer component (A) to not more than 10.0, particularly not more than 9.3, is to use large amount of ethylenically unsaturated monomers whose homopolymers exhibit low "solubility parameters (SP)" and to copolymerize those monomers. The composition ratio of the ethylenically unsaturated monomers to constitute the acrylic copolymer (A) is preferably as follows.

Type and composition ratio of ethylenically unsaturated monomer

The acrylic copolymer component (A) for use in the present invention is a component, which is obtained by copolymerizing:

10 to 40 parts by weight of styrene (A-1) as an essential component,
30 to 60 parts by weight of glycidyl methacrylate and/or β-methyl glycidyl methacrylate (A-2) as an essential component,
at least one monomer selected from the group consisting of 0 to 50 parts by weight of isobutyl methacrylate (A-3), 0 to 50 parts by weight of cyclohexyl methacrylate (A-4), 0 to 45 parts by weight of isoboronyl methacrylate (A-5), 0 to 40 parts by weight of isoboronyl acrylate (A-6) and 0 to 20 parts by weight of methyl methacrylate (A-7), as another ethylenically unsaturated monomer, and
0 to 5 parts by weight of an ethylenically unsaturated monomer (A-8) other than the above monomers, with the proviso that the total amount of the components (A-1) to (A-8) is 100 parts by weight, and
which is controlled to have a weight-average molecular weight Mw, a design Tg, a measured Tg and a solubility parameter SP in the above ranges.

Next, properties and appropriate quantity ranges of the ethylenically unsaturated monomers to constitute the acrylic copolymer (A) are described. Styrene (A-1) that is a first essential monomer is desired to be used in a large amount from the viewpoints of reduction of the cost of the acrylic copolymer (A), acceleration of the thermal curing reaction and impartation of high gloss to the crosslinked cured film. However, if it is used in an amount of more than 40 parts by weight, there is a fear that out-door-durability (weatherability) of the crosslinked cured film is deteriorated, and it is difficult to ensure the out-door-durability under the long term out-door exposure. On the other hand, if the amount of the monomer (A-1) is less than 10 parts by weight, heat resistance of the copolymer (A) is deteriorated, and because of thermal decomposition, troubles are liable to occur in the production process. Therefore, the appropriate amount is in the range of 10 to 40 pars by weight, more preferably 15 to 30 parts by weight. Glycidyl methacrylate and/or β-methyl glycidyl methacrylate (A-2) that is a second essential monomer provides a functional group essential to the thermal curing reaction. The β-methyl glycidyl methacrylate has lower thermal curing reactivity than the glycidyl methacrylate when a polyvalent carboxyl curing agent is used as the curative component (B), as described in, for example, Japanese Patent Laid-Open Publication No. 140379/1999, and by utilizing this low reactivity, smoothness of the coating film is readily improved. However, the time required for decrease of the absolute value of the complex elastic modulus ($\eta^*$) from 100000 Pa·s to 5 Pa·s, that is defined in the present invention, is a parameter in the melting process wherein the thermal curing reaction does not proceed sufficiently, so that it is not always essential to use the β-methyl glydicyl methacrylate having a low thermal curing reaction rate. Use of the β-methyl glycidyl methacrylate may cause deterioration of physical properties and chemical properties of the crosslinked cured film because of insufficient curing, but such deterioration can be compensated by the use with glycidyl methacrylate in combination or by the use of a curing catalyst. However, it is difficult to use β-methyl glycidyl methacrylate in practical level at present, because the β-methyl glycidyl methacrylate is not commercially available. Therefore, use of glycidyl methacrylate alone offers no problem so long as there is no particular restriction.

The appropriate amount of the glycidyl methacrylate and/or β-methyl glycidyl methacrylate (A-2) is in the range of 30 to 60 parts by weight. If the amount thereof is less than 30 parts by weight, not only physical and chemical properties of the resulted cured film are deteriorated but also it becomes difficult to appropriately shorten the time ΔT required for decrease of the absolute value of the complex elastic modulus ($\eta^*$) from 100000 Pa·s to 5 Pa·s. Moreover, the lowest value of the absolute value of the complex elastic modulus ($\eta^*$) is not sufficiently low, and hence a cured film having desired smoothness in the aimed thin film level cannot be obtained. This relates to a matter that the later-described curative component (B) functions as a so-called (crystalline) diluent to promote viscosity decrease in the melting process. That is to say, when the same curative component (B) is used in an equal functional group molar ratio to the acrylic copolymer component (A), the weight concentration of the curative component (B) blended with the acrylic copolymer component (A) having a low (β-methyl)glycidyl group concentration is relatively low, and the effect exerted by the curative component (B) as the diluent in the melting process becomes insufficient. Hence, it is difficult to design a thermosetting powder coating composition having excellent flowability. On the other hand, if the glycidyl methacrylate and/or β-methyl glycidyl methacrylate (A-2) is used in an amount of more than 60 pars by weight, the cost of the acrylic copolymer (A) becomes extremely high and is not practical. More preferred amount thereof is in the range of 35 to 50 parts by weight.

The ethylenically unsaturated monomers (A-3) to (A-7), from which at least one monomer is selected in the invention, are each relatively high in the glass transition temperature (Tg) of their homopolymers, and all of them except the methyl methacrylate (A-7) are monomers which provide hydrophobic homopolymers which have low solubility parameter SP. The isobutyl methacrylate (A-3) can be used in an amount of 0 to 50 parts by weight, and the glass transition temperature of its homopolymer is lower than that of homopolymer of other monomers. If the monomer (A-3) is used in a large amount close to 50 parts by weight, the weight-average molecular weight Mw and the "measured Tg" sometimes deviate from the preferred ranges, so that attention should be paid. The cyclohexyl methacrylate (A-4) can be used in an amount of 0 to 50 parts by weight, but in this case, the effect of lowering the "solubility parameter (SP)" is small. Therefore, the monomer (A-4) is preferably used in an amount of 0 to 20 parts by weight. The isoboronyl methacrylate (A-5) can be used in an amount of 0 to 45 parts by weight, but use of the monomer (A-5) in a high concentration sometimes causes thermal decomposition of the acrylic copolymer (A), odor due to the residual unreacted monomer and yellowing (coloring) of the crosslinked cured film attributable to impurities. Therefore, the monomer (A-5) is preferably used in an amount of 0 to 25 parts by weight.

The isoboronyl acrylate (A-6) can be used in an amount of 0 to 40 parts by weight, but also in this case, use of the monomer (A-6) in a high concentration sometimes causes thermal decomposition of the acrylic copolymer (A), odor due to the residual unreacted monomer, etc. Therefore, the monomer (A-6) is preferably used in an amount of 0 to 20 parts by weight, more preferably in an amount of 0 to 10 parts by weight. The methyl methacrylate (A-7) can be used in an amount of 0 to 20 parts by weight, and this monomer is used for only the purpose of Tg adjustment because it does not contribute to decrease of the "solubility parameter SP" but contributes to only increase of the glass transition temperature Tg. Since the preferred acrylic copolymer component (A) should have a low "solubility parameter (SP)" as previously described, the methyl methacylate (A-7) is not selected alone from the group consisting of the monomers (A-3) to (A-7).

In Japanese Patent Laid-Open Publication No. 078010/1997 and U.S. Patent No. 5663240, the types and the composition ratio of the ethylenically unsaturated monomers for constituting the acrylic copolymer (A) are described. It is assumed that the following is utilized in these preceding techniques. That is to say, use of a (meth)acrylic ester having a side chain that is bulky and gives crystallizability, such as isoboronyl skeleton, readily decreases the molecular weight of an acrylic copolymer in the designing of the same "measured Tg" level and is suitable for designing of powder coatings of high flowability. In the present invention, however, it has been confirmed that when the acrylic copolymer (A) is combined with the below-described specific curative component (B) in a specific ratio, rapid decrease of melt viscosity of the resulted thermosetting powder coating composition takes place very specifically in the melting process even if no isoboronyl (meth)acrylate is used, as far as the acrylic copolymer (A) has a "solubility parameter (SP)" of an appropriate range. In other words, the isoboronyl (meth)acrylate is not essential. The other ethylenically unsaturated monomer (A-8) can be used in an amount of 0 to 5 parts by weight, and this monomer is used for the purpose of adjusting the molecular weight, the glass transition temperature Tg, the solubility parameter (SP) of the acrylic copolymer (A) to appropriate ranges. Therefore, the monomer (A-8) is not essential.

Examples of the above monomers (A-8) employable in the invention include (meth)acrylic esters, such as methyl acrylate, ethyl (meth)acrylate, n-propyl (meth)acrylate, isopropyl (meth)acrylate, n-butyl (meth)acrylate, isobutyl acrylate, tert-butyl (meth)acrylate, n-amyl (meth)acrylate, isoamyl (meth)acrylate, n-hexyl (meth)acrylate, 2-ethylhexyl (meth)acrylate, octyl (meth)acrylate, dodecyl (meth)acrylate, stearyl (meth)acrylate, tridecyl (meth)acrylate, lauroyl (meth)acrylate, cyclohexyl acrylate, benzyl (meth)acrylate, phenyl (meth)acrylate, dimethylaminoethyl (meth)acrylate and diethylaminoethyl (meth)acrylate; carboxyl group-containing vinyls and monoesters thereof, such as acrylic acid, methacrylic acid, maleic acid and itaconic acid; aromatic vinyls, such as α-methylsytene, vinyltoluene and t-butylstyrene; hydroxyl group-containing vinyls, such as hydroxyethyl acrylate, 2-hydroxyethyl (meth)acrylate, 3-hydroxypropyl (meth) acrylate, hydroxybutyl (meth)acrylate, (poly)ethylene glycol mono(meth)acrylate, hydroxyethyl vinyl ether and lactone-modified hydroxyethyl (meth)acrylate; halogen-containing vinyls, such as vinyl chloride, vinylidene chloride, vinyl fluoride, monochlorotrifluoroethylene, tetrafluoroethylene and chloroprene; and other monomers, such as acrylonitrile, methacrylonitrile, vinyl acetate, vinyl propionate, acrylamide, methacryliamide, methylolacrylamide, methylolmethacrylamide, ethylene, propylene, α-olefins of 4 to 20 carbon atoms and vinyl pyrrolidone. Also employable are mocromonomers having the above monomers or their copolymers as segments and having a vinyl group as the end group. These monomers may be used singly or in combination of two or more kinds. The methyl (meth)acrylte described herein means methyl acrylate and methyl methacrylate.

Curative component (B)

The curative component (B) is selected from the following linear polyacid anhydrides: dodecanedioic acid linear polyacid anhydride or tetradecanedioic acid linear polyacid anhydride, which is obtained by intermolecular dehydrocondensation of an aliphatic dibasic acid mixture prepared from a normal paraffin mixture mainly containing a fraction of 12 carbon atoms or a fraction of 14 carbon atoms respectively through a fermentation process and containing not less than 90% by weight of given dodecanedioic acid or tetradecanedioic acid, and which has a residual nitrogen concentration of not more than 150 ppm and an ash concentration of not more than 1000 ppm.

In the production of linear polyacid anhydrides (HO-[OC-$(CH_2)_m$-COO]$_n$-H) (m, n: number of recurring units) of linear aliphatic dibasic acids, synthesis of the linear aliphatic dibasic acids depended upon the chemical synthetic process until recently, and only compounds having an even number as the methylene chain length m were commercialized. Particularly, a compound wherein m is 10 or 18 was the mainstream. Recently, however, there is at last a commercial prospect of production of dibasic acids using fermentation process (bio process utilizing fermentation of microorganism), and linear aliphatic dibasic acids wherein m is in the range of 7 to 17 including odd numbers came to be practically significant as raw materials of the linear polyacid anhydrides. For example, with regard to brassylic acid (tridecanedioic acid) wherein m is 11 that is described in Japanese Patent Laid-Open Publication No. 302724/2000, its commercial supply has been started. In many preceding techniques, there are wide descriptions of the methylene chain length m of the linear aliphatic dibasic acids or their linear polyacid anhydrides, but for the above reason, the experimental verifications were often limited to the case where the methylene chain length m is 10 (dodecanedioic acid).

The properties of the curative component (B) in the present invention wherein smoothness in thin films is thoroughly pursued are described below, in comparison with the dodecanedioic acid (m=10, melting point: 129°C) that is mainly used at present.

1. The curative component (B) is a crystalline compound having a melting point as low as possible within the range not bringing about conspicuous coagulation or blocking of coating particles in combination with the acrylic copolymer (A) having an intentionally decreased Tg.

2. The curative component (B) has high crosslinking performance to recover deterioration of physical properties and chemical properties of the cured film accompanying the intentional reduction of the molecular weight of the acrylic copolymer (A).

3. The curative component (B) has a large functional group equivalent weight and is contained in the thermosetting coating composition in a high concentration and exerts high effect as a (crystalline) diluent.

4. The curative component (B) has compatibility with the acrylic copolymer (A) and does not impair appearance (gloss, transparency, etc.) of the cured film.

Compounds satisfying the above property requisites and noticeable as the curative component (B) are linear polyacid anhydrides prepared by the use of linear aliphatic dibasic acids wherein the methylene chain length m is 10 or 12, which are obtained by fermentation process. The present inventors have confirmed that a linear polyacid anhydride of the aliphatic dibasic acid wherein the methylene chain length m is 10 or 12 is effective, and they have also confirmed the following three facts.

First, as the methylene chain length m of the aliphatic dibasic acid linear polyacid anhydride combined with the acrylic copolymer having a "solubility parameter SP" of 10.0 becomes larger, the gloss of the resulting cured film is lowered, so that in order to solve this problem, it is necessary to decrease the "solubility parameter SP" of the acrylic copolymer component (A) to be combined. For example, in case of tetradecanedioic acid linear polyacid anhydride wherein m is 12, it is preferable to decrease the "solubility parameter (SP)" of the acrylic copolymer component (A) to not more than 9.3. Secondly, when the aliphatic dibasic acid linear polyacid anhydride wherein m is 10 or more is combined with the acyclic copolymer component (A) that is designed to have a low "solubility parameter (SP)", rapid decrease of melt viscosity specifically occurs in the melting process of the powder coating, and this tendency is promoted more conspicuously when the linear polyacid anhydride is used stoichiometrically in excess of acid group. The reason has not been clarified, but it is assumed as one hypothesis that the acrylic copolymer (A) designed to be hydrophobic and to have a low molecular weight is microdispersed with the block polymer-like linear polyacid anhydride having both of hydrophilic polymer ends and hydrophobic methylene chain block, whereby micro clusters of the acrylic copolymer (A) are formed in the powder coating during the melting process, and when the polyacid anhydride is blended in excess, the function of the polyacid anhydride as a lubricant among the clusters is enhanced, resulting in rapid decrease of melt viscosity that is not found in the conventional coatings. The reason why such a (meth)acrylic ester monomer having isoboronyl skeleton as described in Japanese Patent Laid-Open Publication No. 078010/1997 and U.S. Patent No. 5663240 is not used essentially as an ethylenically unsaturated monomer for constituting the acrylic copolymer (A) of the present invention as previously described is also assumed as follows. That is to say, the factor to dominate the morphology exhibited by the acrylic copolymer component (A) and the acid curative component (B) of the present invention in a molten state depends on only the degree of hydrophobicity of the acrylic copolymer (A).

Next, five reasons for selecting the dibasic acid linear polyacid anhydride wherein m is 10 or 12 as the curative component (B) in the present invention are described below. First, a linear polyacid anhydride wherein the methylene chain length m is in the range of 10 to 17 and is an odd number has a low melting point, and when it is combined with the acrylic copolymer (A) of the invention having been intentionally decreased in Tg, it becomes difficult to avoid marked coagulation or blocking of the coating particles. Secondly, provided that the methylene chain length m is an even number, a linear polyacid anhydride having a larger m tends to have a higher melting point and is preferable, but in the use of an aliphatic dibasic acid linear polyacid anhydride having a larger m, especially, in stoichiometrically excess of acid group, gloss of the resulting cured film tends to be lower conspicuously. In case of a linear polyacid anhdyride wherein m is 11 or more, particularly 14 or more, gloss of the cured film is not sufficiently recovered occasionally even if the "solubility parameter (SP)" of the acrylic copolymer component (A) is decreased. Thirdly, when an aliphatic dibasic acid wherein m is 14 or more is produced with high purity in a high yield by fermentation process, the load of processing is heavy, and there is a high possibility of increase of cost. Fourthly, if the number m of carbon atoms is 14, the thermosetting powder coating composition consisting of the aliphatic dibasic acid (hexadecanedioic acid) which has not been converted into a linear polyacid anhydride and the acrylic copolymer component (A) shows the specificity that the decrease rate of the absolute value of the complex elastic modulus ($\eta^*$) in the melting process becomes extremely slow especially when the "solubility parameter SP" of the acrylic copolymer (A) comes close to 10.0. Hence, when the degree n of condensation of the hexadecanedioic acid linear polyacid anhydride is low, deterioration of appearance attributable to ununiform crosslinking is easily brought about. Fifthly, the polyacid anhydride wherein the methylene chain length m is 10 or 12 satisfies the aforesaid four requisites of the curative component (B). Particularly in case of the tetradecanedioic acid linear polyacid anhydride wherein m is 12, the resulting cured film has flexibility and specifically shows very good scratch/mar resistance as explained in detail below. Especially in the automotive top clear coating, there can be expected improvement of coating films in the better scratch/mar in car wash machine that is the greatest technical problem in comparison with the solvent-borne acrylic clear paints which are mainly used at present.

Next, the process for preparing the linear polyacid anhydride wherein the methylene chain length m is 10 or 12, namely, dodecanedioic acid linear polyacid anhdyride or tetradecanedioic acid linear polyacid anhydride, which is particularly preferable as the curative component (B), and the properties thereof are described below. The dodecanedioic acid or the tetradecanedioic acid of the present invention is preferably prepared by fermentation process. In the fermentation process, a normal paraffin mixture mainly containing a fraction of 12 carbon atoms or a fraction of 14 carbon atoms is used as a starting material, and a linear aliphatic dibasic acid having the same number of carbon atoms is obtained. In the present invention, the purity of the resulting linear aliphatic dibasic acid is preferably not less than 90% by weight, more preferably not less than 95% by weight. The reason is described below taking the dodecanedioic acid as an example. In the preparation of the dodecanedioic acid linear polyanhydride with fermentation process, normal paraffin of a fraction of 12 carbon atoms (dodecane) is used as a starting material. The normal paraffin starting material, however, is usually a mixture of normal paraffins of different numbers of carbon atoms, so that it is necessary to isolate only dodecane by fractionation prior to use. When a mixture of normal paraffins wherein m is 8 to 10 ($CH_3$-$(CH_2)_m$-$CH_3$) is directly subjected to operations of fermentation process except the fractionation step or with incomplete fractionation, a mixture of dibasic acids wherein m is 8 to 10 (HOOC-$(CH_2)_m$-COOH) including dodecanedioic acid (m=10) is obtained.

A commercially available material corresponding to the above mixture is, for example, "Corfree M1" (available from DuPont). The melting point of this material is 85 to 95°C and is extremely lower than the melting points of its constituents, namely, a constituent of m=8 (sebacic acid, melting point: 135°C), a constituent of m=9 (undecanedioic acid, melting point: 111°C), and a constituent of m=10 (dodecanedioic acid, melting point: 129°C). That is to say, in the mixture of aliphatic dibasic acids having different numbers of carbon atoms, crystallizabilities of the constituents are inhibited from each other to extremely decrease the melting point. If such mixture of dibasic acids is dehydrocondensed to prepare a linear polyacid anhydride, with the same as the use of dibasic acids wherein m is odd number, the melting point is further decreased conspicuously, so that particle blocking or coagulation of a powder coating obtained by combining it with the acrylic copolymer component (A) cannot be avoided. Therefore, the purity of the dodecanedioic acid in the dodecanedioc acid starting material used for the dehydrocondensation should be not less than 90%, preferably not less than 95%, and in order to obtain such a purity, fractionation of the starting normal paraffin in the fermentation process is indispensable. The same applies to the case of m=12 (tetradecanedioic acid linear polyacid anhydride), and it is necessary to use normal paraffin containing a fraction of m=12 (number of carbon atoms: 14) in a high concentration.

Dehydrocondensation of the dodecanedioic acid or the tetradecanedioic acid prepared by the fermentation process is carried out by a known method such as acetic anhydride method or phosgene method. The acetic anhydride method is described in detail in "Journal of Polymer Science", 29 343 (1958), by Mr. A. Conis, and regarding the phosgene method, studies have been made in the Massachusetts Institute of Technology. In the present invention, intentional co-condensation of the dodecanedioic acid and the tetradecanedioic acid in the dehydrocondation operation is not taken into consideration. The reason is that co-condensation of different dibasic acids is accompanied by extreme decrease of melting point in many cases and there is a high risk of coagulation or blocking of the powder coating particles in the invention.

In the dodecanedioic acid linear polyacid anhydride or the tetradecanedioic acid linear polyacid anhydride thus obtained, protein derived from residual microorganism that has been present in the starting dodecanedioic acid or tetradecanedioic acid and ash content derived from inorganic components are usually present as impurities. The degree of the presence is extremely higher as compared with the case of using an aliphatic dibasic acid prepared by chemical synthesis, and they exerts serious influence on the cured film finally obtained. If the concentration of residual nitrogen exceeds 150 ppm, the coating film is markedly yellowed in the baking process. Therefore, the allowable concentration of residual nitrogen is not more than 150 ppm, preferably not more than 50 ppm. The ash content gives haze to the resulting crosslinked cured film, and besides, it may be visually observed as a foreign matter on the film, so that the ash content is not more than 1000 ppm, preferably not more than 300 ppm, more preferably not more than 100 ppm. These residual nitrogen and ash content can be removed by performing purification in accordance with the method described in Japanese Patent Laid-Open Publication No. 302724/2000.

Next, a preferred degree of condensation (n) of the dodecanedioic acid linear polyacid anhydride or the tetradecanedioic acid linear polyacid anhydride is described. The degree of condensation (n) referred to in the present invention is a calculative average degree of condensation calculated based on the acid equivalent weight actually measured as the total amount of the both-end carboxyl group and the acid anhydride group in the dodecanedioic acid linear polyacid anhydride or the tetradecanedioic acid linear polyacid anhydride, by chemical analysis using the half-esterification method, on the assumption that the dodecanedioic acid linear polyacid anhydride or the tetradecanedioic acid linear polyacid anhydride is prepared from 100% of dodecanedioic acid or 100% of tetradecanedioic acid. The half-esterification method is described in detail in "Thermosetting Resins" vol. 3, No. 3, pp. 127-133, (1982), and in case of, for example, dodecanedioic acid linear polyacid anhydride, the relationship between the acid equivalent weight X (g/eq.) actually measured by the half-esterification method and the degree of condensation (n) is represented by the following formula.

$$\text{Formula 1} \qquad X \text{ (g/eq.)} = (212n+18)/(n+1)$$

As a result of studies by the present inventors, with increase of the degree of condensation (n) of each of the polyacid anhydrides, the melting point, particularly melting starting temperature, tends to rise, and this is advantageous from the viewpoint of particle coagulation or blocking of the resulting thermosetting powder coating. Further, rise of the degree of condensation increases the acid equivalent weight X (g/eq.), and when the curative component (B) is blended in an equal functional group molar ratio to the acrylic copolymer (A), the weight concentration of the curative component (B) in the thermosetting coating composition is relatively increased, whereby the function of the curative component (B) as the (crystalline) diluent is enhanced, so that smoothness of a cured film in a thin film thickness that is an object of the present invention is easily attained. However, the aliphatic dibasic acid linear polyacid anhydride itself is easily hydrolyzed in air, and the degree of condensation is decreased with time. For example, a polyacid anhydride having a degree of condensation of infinity undergoes abrupt hydrolysis from just after the preparation or production, and the hydrolysis rate is abruptly slowed down in the condensation degree range of 2 to 6, whereby the polyacid anhydride is stabilized. Accordingly, if the practical storage stability of the curative component (B) itself is regarded as important, the appropriate degree of condensation (n) is in the range of 2 to 6. In comparison between the dodecanedioic acid linear polyacid anhydride and the tetradecanedioic acid linear polyacid anhydride, the tetradecanedioic acid linear polyacid anhydride is relatively preferable for the following reasons. First, the hydrolysis rate is slightly slower. Secondly, the melting point is higher by at least 5°C in case of the same degree of condensation. Thirdly, when the polyacid anhydride having the same degree of condensation is blended in an equal functional group molar ratio to the acrylic copolymer component (A), the effect exerted as the (crystalline) diluent is higher because of larger acid equivalent weight. Fourthly, as described above,- the resulting crosslinked cured film has flexibility and specifically shows very good scratch/mar resistance, and these properties are retained even in the condensation degree range of less than 2.

Here, relating to the fourth reason, the present inventors had not succeeded to explain the mechanism of this peculiar character. But it is assumed as follows. According to the data of the present inventors, the scratch/mar resistance of the crosslinked cured film can be improved both by enhancing the film hardness and by increasing the film elongation ratio until the breaking point. That is to say, it can be said, that one of the solutions to improve scratch/mar resistance is aiming to realize the crosslinked cured film with both soft character and hard character simultaneously. For this purpose, paint design, which can give flexible but highly crosslinked cured film can be appropriate approach. In the present invention, the inventors confirmed that, in comparing with conventional dodecanedioic acid curing system, tetradecanedioic acid linear polyacid anhydride curing system could give significantly higher crosslinlking density (lower Mc: average molecular weight between crosslinking points) and, in addition, peculiarly flexible film even that the methylene block has only two more methylene groups. In addition, it was also confirmed that this flexibilization could be more significant when tetradecanedioic acid was used stoichiometrically in excess with (A) as preferable conditions in the present invention. As a matter of fact, in the acid rich range (b)/(a) is 1.05 to 1.30, higher (b)/(a) gives softer film hardness and it can be checked by the measurement of pencil hardness. On the other hand, although dodecanedioic acid linear polyacid anhydride can also contribute to enhance the crosslinking density, it cannot soften (flexibilize) the cured film significantly and the change of film hardness is not significant. Accordingly, considering the best balance between higher crosslinking density due to acid anhydride group and the flexibilizing effect due to the increase of methylene chain length, tetradecanedioic acid linear polyacid anhydride is better especially for the application of automotive top clear coating on which purpose the present invention is strongly focusing. As for the softness of cured film given peculiarly by tetradecanedioic acid linear polyacid anhydride, it can be allowable practically at the present requirement for automotive coating. ,

Recent technique using a linear polyacid anhydride as a curative component is described in Japanese Patent laid-Open Publication No. 239566/2000. In this publication, the methylene chain length m is not restricted, and by applying the fact that the rate of thermal curing reaction of glycidyl group with acid anhydride group is lower than that of glycidyl group with carboxyl group, an attempt wherein one-end carboxyl groups are further made non-functional to further lower the thermal curing rate and thereby prepare a high-flow thermosetting powder coating is made.

In the present invention, however, making one-end carboxyl groups non-functional is thought to produce a reverse effect, in consideration of deterioration of physical properties and chemical properties of the crosslinked cured film that is apprehended from the low molecular weight designing of the acrylic copolymer (A). Further, control of the melting process, not the thermal curing process, is regarded as important, so that it is apparent that the idea of coating designing is greatly different.

Rosin modification of acrylic copolymer component (A)

When a linear polyacid anhydride, which is prepared by the use of an aliphatic dibasic acid having a large methylene chain length m as a starting material, is used as the curative component (B), especially at high (b)/(a), gloss of the resulting cured film is often deteriorated, and even by decreasing the "solubility parameter (SP)" of the acrylic copolymer component (A), the gloss cannot be recovered sufficiently in some cases. This means that also in the case where the aliphatic dibasic acid, which is obtained by fermentation process using as a starting material a mixture of normal paraffins containing as impurity a large amount of normal paraffin having large methylene chain length m, contains a dibasic acid component having large methylene chain length m as impurity, the coating film of a thermosetting powder coating containing as the curative component (B) a linear polyacid anhydride of the dibasic acid is liable to have a problem of gloss. Especially when the dibasic acids obtained by fermentation process are applied, this point should be taken into consideration. Needless to say, it is obvious that the tetradecanedioic acid linear polyacid anhydride has a higher risk of deterioration of the film gloss than the dodecanedioic acid linear polyacid anhydride.

It is described above that use of the dibasic acid containing a linear aliphatic dibasic acid having a desired methylene chain length m in a high concentration as a starting material of a linear polyacid anhydride is preferable for the purpose of avoiding a risk of decrease of melting point of the resulting linear polyacid anhydride. A problem of film gloss in case of large methylene chain length m is also described above. However, when excellent appearance of the coating film needs to be continuously reproduced very stably in the continuous line coating such as the automotive top clear coating, variability in quality of the starting material is fatal, and in order to stably avoid deterioration of the film gloss, another practical means is desired. Then, the present inventors have confirmed that deterioration of the film gloss can be improved very stably by previously graft-modifying a part of (β-methyl)glycidyl groups of the acrylic copolymer (A) with rosin (C) having carboxyl group and having a melting point of not lower than 45°C in such a manner that the weight ratio of the rosin (C) to the acrylic copolymer (A) becomes 0.01 to 3%. An example of the rosin (C) preferably employable in the invention is KR-85 available from Arakawa Chemical Industries, Ltd.. However, even by the use of the rosin, insufficient gloss sometimes occurs in case of the aliphatic dibasic acid linear polyacid anhydride wherein the methylene chain length m is 14 or more, and there has not been found any favorable solution to avoid a risk that modification of the acrylic copolymer component (A) with more than 3% by weight of the rosin (C) deteriorates out-door-durability (weatherability) of the coating film. The rosin (C) of 0.01 to 3.0% by weight can be added in the production of the acrylic copolymer (A) to graft modify a part of its (β-methyl)glycidyl groups, or can be added as an additive together with the curative component (B) in the production of the thermosetting powder coating composition. In order to avoid a risk of appearance defect of the coating film caused by poor dispersion of the rosin (C) in the blending or compounding operation of the coating composition, it is preferable to directly modify the acrylic copolymer component (A) prior to use.

Blending ratio between acrylic copolymer component (A) and curative component (B)

The acrylic copolymer component (A) and the curative component (B) may be theoretically used in such amounts that the equivalent weight ratio ((b)/(a)) of the acid group (b) in the component (B) to the total of the β-methylglycidyl group and the glycidyl group (a) in the component (A) becomes 1/1. In many preceding techniques, there are descriptions of,very wide ranges of (b)/(a) as appropriate ranges, but in the experimental verification, there is almost no case where blending for the coating composition is made in excess of acid group. The reason is that the unreacted functional group remaining in the cured film, particularly the acid group, exerts bad influence on the chemical properties of the crosslinked cured film and the market price of the acrylic copolymer component (A) is higher than that of the curative component (B) in many cases. The acid equivalent weight X (g/eq.) of the curative component (B) in the present invention is a value calculated as the total amount of the both-end carboxyl group and the acid anhydride group, as previously described in the formula 1. In the present invention, the components (A) and (B) are preferably used in excess of the acid group in such a manner that the molar ratio ((b)/(a)) becomes 1.05-1.30/1.0, preferably 1.10-1.30/1.0, more preferably 1.15-1.25/1.0. This is very advantageous from the viewpoint that the curative component (B) can be expected to extremely highly function as a (crystalline) diluent in the melting process. In addition, as above mentioned, it's also advantageous to get peculiarly excellent scratch/mar resistance by using tetradecanedioic acid linear polyacid anhydride as the component (B). According to the trial calculation by the present inventors, increase of the material cost of the coating owing the conversion of the linear aliphatic dibasic acid such as dodecanedioic acid or tetradecanedioic acid to the linear polyacid anhydride thereof and blending in excess of acid group, can be sufficiently compensated by the decrease of the amounts of the coating materials attributable to the attainment of drastic reduction of film thickness. That is to say, the most important point to give significance to the use of the curative component (B) in excess of acid group is whether the unreacted acid group remaining in the crosslinked cured film exerts bad influence on the chemical properties of the film or not.

Use of the linear polyacid anhydride as the curative component (B) is advantageous from the view point of increased crosslinking density given in the cured film, that is, the reaction of the (β-methyl)glycidyl group with the acid anhydride group forms crosslinked branched points and can decrease the molecular weight between the crosslinked points (can increase the crosslink density) of the resulting crosslinked cured film, differently from the reaction of the (β-methyl)glycidyl group with the carboxyl group. The chemical properties of the crosslinked cured film often depends particularly upon the crosslink density, and as confirmed by the present inventors, its effect is obvious for especially the chemical properties of the cured film and described in, for example, EP696622. Further, there is an attempt to improve low crosslink density of the coating film when an aliphatic dibasic acid such as dodecanedioic acid is used as the curative component. For example, a secondary hydroxyl group formed by the thermal curing reaction of glycidyl group with carboxyl group is used as a new branching point by using polyisocyanate compounds as co-curing agent with dodecanedioic acid as shown in WO2001010925 and US7510214. As described above, merits of the increased crsslink density of the crosslinked cured film are found in many preceding techniques, but there has not been confirmed or verified a balance between the risk of deterioration of chemical properties by the unreacted acid group remaining in the crosslinked cured film and the improvement of chemical properties owing to increase of the crosslink density due to the acid anhydride group.

A thermosetting acrylic powder coating composition is generally prepared by melt blending (compounding) starting materials essentially containing the acrylic copolymer component (A) and the curative component (B) at a temperature at which the curing reaction does not substantially occur, and is used as a powder coating. This means that the both components are not completely blended to the molecule level, and besides, in case of a conventional powder coating not exhibiting sufficiently high flowability in the melting process, it can be hardly thought, from the mobility of the powder coating in the melting process, that an ideal rate of consumption of the functional groups in the acrylic copolymer component (A) and the curative component (B) by thermal reaction under normal baking conditions is reached. That is to say, concerning the thermosetting powder coating composition of the present invention, which exhibits extremely high flowability and mobility in the melting process, even if the curative component (B) is used in excess of acid group, there is a possibility to be able to maintain properties, particularly chemical properties, of the crosslinked cured film to be good. Accordingly, it can be considered that retention of sufficient physical properties and chemical properties in the present invention even in excess of acid group is attributable to both of the high mobility in the melting process and the increase of the crosslink density due to the acid anhydride group in the linear polyacid anhydride used as curative component (B). This also indicates that the low reactivity of the acid anhydride group to the (β-methyl)glycidyl group and the risk of insufficient curing can be avoided even if such polyols (alcohols) as shown in DE4227580 are not used in combination.

Coating additives

To the thermosetting powder coating composition of the present invention, various additives employable for usual powder coatings may be added when needed. For example, according to the purpose of the coating composition, synthetic resins, such as epoxy resin, polyester resin and polyamide resin, natural resins containing fibers or cellulose derivates, or semisynthetic resins, etc. may be appropriately added to improve film properties. Further, according to the purpose, additives, such as curing catalyst, pigment for coloration, flow additive, thixotropic agent (thixotropy modifier), charge control agent, surface modifier, gloss control agent, anti-blocking agent, plasticizer, ultraviolet light absorber, light stabilizer, degassing agent, antioxidant, slipping agent and powder fluidizing agent, may be appropriately added. However, when the thermosetting powder coating composition is used for automotive cop clear coating, the amounts of the additives used should be properly determined within limits not detrimental to the transparency and the out-door-durability of the resulting crosslinked cured film.

Difference from the preceding technique in the coating formulation

Next, the difference between the preceding techniques and the present invention in the coating formulation is described additionally.

In the present invention, isoboronyl (meth)acrylate that is essential in Japanese Patent Laid-Open Publication No. 78010/1997 and US5663240 and β-methyl glydiyl methacrylate (β-methyl GMA) that is essential in Japanese Patent Laid-Open Publication No. 140379/1999 are not essential constituents of the acrylic copolymer component (A), and they can be replaced with another ethylenically unsaturated monomer capable of providing a homopolymer having a low solubility parameter (SP) and glycidyl methacrylate alone, respectively. In a preferred embodiment, the acrylic copolymer component (A) can be previously modified with rosin (C) having carboxyl group. Further, the acrylic copolymer component (A) has an extremely low weight-average molecular weight Mw and a low glass transition temperature Tg, which are not shown in the preceding techniques.

As the curative component (B), tetradecanedioic acid linear polyacid anhydride that is used in the present invention is preferable to dodecanedioic acid linear polyacid anhydride that is desirably used in EP696622, and a linear polyacid anhydride derived from dodecanedioic acid or tetradecanedioic acid prepared by fermentation process, and having specific properties and quality is more preferable. The blending molar ratio of the curative component (B) to the acrylic copolymer component (A) is obviously preferably a molar ratio in excess of acid group.

Moreover, polyisocyanate compounds described in WO2001010925 and US7510214 as co-curatives and polyols which are used as the reaction accelerators of acid anhydride group in DE4227580 are not essential components in the present invention, though they are employable as other additives in the present invention.

Preparation of powder coating composition

In the preparation of the thermosetting powder coating composition containing the functional group-containing acrylic copolymer component (A) and the curative component (B), there is no specific limitation on the method of blending the component (A) with the component (B) provided that a substantially homogeneous powder coating composition can be obtained even if melt blending up to molecule level can not be reached.

For blending and compounding the component (A) with the component (B), conventionally known blending machines, such as heating roller, heating kneader, extruder, mixer (Banbury type, transfer type, etc.) and calendering equipment, can be usually used in appropriate combination. In the operation of these blending machines, the blending conditions (temperature, number of revolutions, atmosphere, etc.) have only to be appropriately determined.

If necessary., the powder coating (coarse powder coating) obtained through the above blending process may be pulverized to obtain a powder coating composition in a fine powder state. This fine powder can be obtained by a conventionally known method. For example, in order to obtain a mechanically pulverized fine powder of non-spherical indefinite-shaped particles having an average particle diameter of 10 to 90 μm, a crushing type pulverizer such as a hammer mill is employable.

In the present invention, the thermosetting powder coating composition is desirably in the form of particles having a volume average particle diameter of not less than 18 μm, preferably 20 to 30 μm. If the volume average particle diameter is less than 20 μm, particularly less than 18 μm, coagulation or blocking of the coating particles, and further, deterioration of coating workability or transfer efficiency accompanying the coagulation or blocking are liable to occur. If the volume average particle diameter exceeds 30 μm, smoothness of the coating film is sometimes impaired.

Coating method and baking method

The powder coating (thermosetting powder coating composition) of the present invention obtained as described above is subjected to a coating method such as electrostatic spray coating or fluidized bed dipping to allow the powder to adhere the coating object (metal substrate, undercoating film surface, etc.), and the powder is heated and cured to form a coating film (cured film).

When the powder coating does not contain an organic additive which excessively inhibits decrease of melt viscosity in the melting process and an organic or inorganic pigment for coloration which markedly deteriorate transparency of the crosslinked cured film, the crosslinked cured film (clear film) obtained by applying and curing the thermosetting powder coating composition exhibits smoothness (Lw value: not more than 4.0) corresponding to that of solvent-borne acrylic clear paints, in a thin film thickness level of not more than 50 μm and to the minimum 35 μm.

Baking of the thermosetting powder coating composition of the present invention is usually carried out at a temperature of about 100 to 180°C, preferably 120 to 160°C, for a period of about 10 to 60 minutes.

Not only when a conventional solvent-borne paint is used as an under coating paint but also when a water-borne paint is used as an under coating paint, the top coating film obtained by applying the thermosetting powder coating composition of the present invention onto the under coating film and baking the composition exhibits excellent film properties similar to the case where the solvent-borne paint is used as the top coating paint.

That is to say, when the water-borne under coating paint (including a paint containing pigment and/or metal powder) is applied and dried for a given period of time and then the thermosetting powder coating composition of the invention is applied onto the resulting under coating film and heated to cure the composition, a top coating film having the above-mentioned excellent properties can be formed.

The thermosetting powder coating composition of the present invention is favorably used for coating of substrate surfaces of coating objects, such as automotive bodies and automotive parts (e.g., aluminum wheel, wiper, pillar, door handle, fender, bonnet, air spoiler, stabilizer, front grille).

The thermosetting powder coating composition of the present invention has storage stability (anti-blocking, anti-coagulation, etc.) of practical level. The coating film obtained by applying the composition onto the substrate surface by an appropriate or publicly known coating method exerts excellent performance in appearance (particularly smoothness, transparency and gloss), physical properties (particularly hardness and scratch/mar resistance) and chemical properties (particularly acid resistance and solvent resistance), even in a thin film thickness of not more than 50 $\mu$m and to the minimum 35 $\mu$m, and the coating film can sufficiently exert its excellent performance even in the automotive top clear coating where the above properties are most severely required.

**EXAMPLE**

The thermosetting powder coating composition of the present invention is further described with reference to the following examples, but it should be construed that the invention is in no way limited to those examples. In the following description, the terms "part(s)" and "%" are both on the basis of weight, unless otherwise noted.

Preparation Example 1 (preparation of acrylic copolymer component (A))

A four-necked flask equipped with a stirrer, a thermometer, a reflux condenser and a nitrogen inlet was charged with 66.7 parts of xylene and heated to the reflux temperature with purging nitrogen. To the flask, a mixed solution consisting of 20 parts of styrene as the monomer (A-1), 40 parts of glycidyl methacrylate as the monomer (A-2), 38 parts of isoboronyl acrylate as the monomer (A-6), 2 parts of normal butyl methacrylate as the monomer (A-8) and 10 parts of t-butyl peroxy-2-ethylhaxanoate as a polymerization initiator as shown in Table 1 was fed over a period of 5 hours, and they were maintained at 100°C for 5 hours to perform copolymerization reaction of these monomers. The solvent xylene was distilled off from the resulting resin solution under vacuum to obtain an acrylic copolymer component (A). The acrylic copolymer component (A) had a number-average molecular weight Mn (measured by GPC) of 1520, a weight-average molecular weight Mw (measured by GPC) of 3150 and an epoxy equivalent weight, as measured by perchloric acid titration, of 380 (g/eq.). The design Tg of the component (A), as determined by the Fox's formula, was 75.1°C, and the "solubility parameter (SP)" thereof, as determined by the Fedors method, was 9.0. The glass transition temperature Tg of the component (A), as measured by a differential scanning calorimeter (DSC), was 36°C.

Preparation Examples 2 to 4, 6, 7, 9 and 10 (preparation of acrylic copolymer component (A))

An acrylic copolymer component (A) was obtained in the same manner as in Preparation Example 1, except that the types and the composition ratio of ethylenically unsaturated monomers used and the amount of polymerization initiator t-butyl peroxy-2-ethylhexanoate were changed as shown in Table 1. The measured properties (number-average molecular weight Mn, weight-average molecular weight Mw, epoxy equivalent weight, glass transition temperature Tg) of the resulting acrylic copolymer component (A) and the design values (glass transition temperature Tg, solubility parameter (SP)) are set forth in Table 1.

Preparation Example 5 (preparation of acrylic copolymer component (A))

A four-necked flask equipped with a stirrer, a thermometer, a reflux condenser and a nitrogen inlet was charged with 66.7 parts of xylene and heated to the reflux temperature with purging nitrogen. To the flask, a mixed solution consisting of 15 parts of styrene as the monomer (A-1), 40 parts of glycidyl methacrylate as the monomer (A-2), 35 parts of isobutyl methacrylate as the monomer (A-3), 10 parts of methyl methacrylate as the monomer (A-7) and 9 parts of t-butyl peroxy-2-ethylhaxanoate as a polymerization initiator as shown in Table 1 was fed over a period of 5 hours, and they were maintained at 100°C for 5 hours to perform copolymerization reaction of these monomers. With maintaining the resulting resin solution at 100°C, 1 part of KR-85 (available from Arakawa Chemical Industries, Ltd.) as the acid functional rosin (C) was additionally introduced, followed by stirring for 1 hour. Then, the solvent xylene was distilled off under vacuum to obtain an acrylic copolymer component (A). The acrylic copolymer component (A) had a number-average molecular weight Mn (measured by GPC) of 1660, a weight-average molecular weight Mw (measured by GPC) of 3780 and an epoxy equivalent weight, as measured by perchloric acid titration, of 382 (g/eq.). The design Tg of the component (A), as determined by the Fox's formula, was 65.2°C, and the "solubility parameter (SP)" thereof, as determined by the Fedors method, was 9.3. The glass transition temperature Tg of the component (A), as measured by a differential scanning calorimeter (DSC), was 37°C.

Preparation Example 8 (preparation of acrylic copolymer component (A))

An acrylic copolymer component (A) was obtained in the same manner as in Preparation Example 5, except that the types and the composition ratio of ethylenically unsaturated monomers used and the amount of KR-85 (available from Arakawa Chemical Industries, Ltd.) used as the acid functional rosin (C) were changed as shown in Table 1. The measured properties (number-average molecular weight Mn, weight-average molecular weight Mw, epoxy equivalent weight, glass transition temperature Tg) of the resulting acrylic copolymer component (A) and the design values (glass transition temperature Tg, solubility parameter (SP)) are set forth in Table 1.

Preparation Example 1 (preparation of dodecanedioic acid linear polyacid anhydride used as curative component (B))

In a reactor, 700 parts of dodecanedioic acid (available from Cathay Biotechnology) obtained using normal paraffin mainly containing a fraction of 12 carbon atoms through the steps of both-end carboxylation by fermentation, isolation and purification and having a purity of 97% by weight, and 420 parts of acetic anhydride were placed, and they were subjected to dehydration reaction for 2 hours at the reflux temperature. Then, the pressure was reduced to 2 mmHg at 160°C, and acetic anhydride and acetic acid formed were distilled off. To perform purification operation, 250 parts of the resulting crude dodecanedioic acid linear polyacid anhydride and 1400 parts of isobutyl acetate were placed in a different reactor, and they were maintained at 110°C for 15 minutes. Immediately thereafter, 5 parts of activated carbon were introduced, followed by stirring for 10 minutes. Then, hot filtration was conducted to separate activated carbon and insolubles, and the filtrate was cooled to 5°C to precipitate dodecanedioic acid linear polyacid anhydride. The precipitate was filtered and vacuum dried at 45°C for 24 hours to obtain purified dodecanedioic acid linear polyacid anhydride. The degree of condensation (n) of the dodecanedioic acid linear polyacid anhydride was 3.6, the residual nitrogen concentration was 41 ppm, the ash concentration was 90 ppm, and the melting point was 90°C.

Preparation Example 2 (preparation of tetradecanedioic acid linear polyacid anhydride used as curative component (B))

In a reactor, 750 parts of tetradecanedioic acid (available from Cathay Biotechnology) obtained using normal paraffin mainly containing a fraction of 14 carbon atoms through the steps of both-end carboxylation by fermentation, isolation and purification and having a purity of 98% by weight, and 400 parts of acetic anhydride were placed, and they were subjected to dehydration reaction for 2 hours at the reflux temperature. Then, the pressure was reduced to 2 mmHg at 160°C, and acetic anhydride and acetic acid formed were distilled off. To perform purification operation, 300 parts of the resulting crude tetradecanedioic acid linear polyacid anhydride and 1500 parts of isobutyl acetate were placed in a different reactor, and they were maintained at 110°C for 15 minutes. Immediately thereafter, 5 parts of activated carbon were introduced, followed by stirring for 10 minutes. Then, hot filtration was conducted to separate activated carbon and insolubles, and the filtrate was cooled to 5°C to precipitate tetradecanedioic acid linear polyacid anhydride. The precipitate was filtered and vacuum dried at 45°C for 24 hours to obtain purified tetradecanedioic acid linear polyacid anhydride. The degree of condensation (n) of the tetradecanedioic acid linear polyacid anhydride was 3.6, the residual nitrogen concentration was 90 ppm, the ash concentration was 190 ppm, and the melting point was 97°C.

Preparation Example 3 (preparation of tetradecanedioic acid linear polyacid anhydride used as curative component (B))

Tetradecanedioc acid linear polyacid anhydride was obtained in the same manner as in Preparation Example 2, except that the purification operation was not performed at all. The degree of condensation (n) of the tetradecanedioic acid linear polyacid anhydride was 3.6 which was equal to that in Preparation Example 2, the residual nitrogen concentration was 220 ppm, the ash concentration was 1100 ppm, and the melting point was 98°C.

Preparation Example 4 (preparation of tetradecanedioic acid linear polyacid anhydride used as curative component (B))

8 Parts of brassylic acid having a purity of 98%, 84 parts of tetradecanedioic acid having a puritty of 98% and 8 parts of pentadecendioic acid having a purity of 95% each of which had been prepared by fermentation process were dry mixed, and the mixture was adjusted to have a purity of 85% as that of tetradecanedioic acid. The resulting dry mixture was regarded as tetradecanedioic acid, and by the use of this dry mixture, a linear polyacid anhydride was prepared in the same manner as in Preparation Example 2. The acid equivalent weight (carboxyl group + acid anhydride group) of the resulting linear polyacid anhdyride, as measured by the half-esterification method, was 190 g/eq., and the degree of condensation (n) thereof was calculated to be 3.5 on the assumption that the dry mixture was tetradecanedioic acid having a purity of 100%. The residual nitrogen concentration was 110 ppm, the ash concentration was 68 ppm, and the melting point was 84°C.

Example 1 (preparation of thermosetting powder coating composition)

Into a Henschel mixer (manufactured by Mitsui Mining Co., Ltd.), 62 parts of the acrylic copolymer component (A) obtained in Preparation Example 1 and shown in Table 1, 38 parts of the tetradecanedioic acid linear polyacid anhydride (average degree of condensation: 3.6, acid equivalent weight (carboxyl group + acid anhydride group): 192 g/eq., melting point: 97°C) obtained in Preparation Example 2 as the curative component (B), 2 parts of an ultraviolet light absorber Tinuvin CGL1545 (available from Ciba Specialty Chemicals K.K.), 1 part of a hindered amine light stabilizer Tinuvin CGL052 (available from Ciba Specialty Chemicals K.K.), 0.5 part of benzoin, 0.3 part of a flow additive, 0.2 part of tetrabutylphosphonium bromide and 0.1 part of N,N'-ethylenebis(stearamide) as a slipping agent were together introduced, and they were dry mixed at room temperature, followed by melt blending at 70°C by the use of a single screw extruder (manufactured by Coperion). Then, operations of solidification, pulverization and sieving were performed, and finally, 0.2 part of a silica powder additive "Aerosil RX300" (available from Nippon Aerosil_ K.K.) was dry mixed for the purposes of ensuring sufficient powder flowability and preventing coagulation. Thus, a thermosetting powder coating composition of Example 1 was completed. The particle size of the resulting coating composition was measured by SALAD2000 manufactured by Shimadzu Corporation. As a result, the volume average particle diameter was 25 microns, and the particles were non-spherical indefinite-shaped ones having a particle size distribution. The flow additive used above was a flow additive obtained by preparing a solid homopolymer of isobutyl methacrylate having a weight-average molecular weight Mw of 12000 in accordance with Preparation Example 1 of the acrylic copolymer component (A) and pulverizing the solid homopolymer to an average particle size of 0.5 mm. The blending molar ratio of the acid group (b) in the curative component (B) to the glycidyl group (a) in the acrylic copolymer component (A) in this Example 1 was 1.21/1 (acid group (b)/glycidyl group (a)) and was designed in excess of acid group. The results are all set forth in Table 2.

Examples 2 to 7, Comparative Examples 1 to 7

(preparation of thermosetting powder coating composition)

A thermosetting powder coating composition was prepared in the same manner as in Example 1, except that the type of the acrylic copolymer component (A), the type of the curative component (B) and the blending molar ratio (acid group (b)/(β-methyl)glycidyl group (a)) were changed. The corresponding relationship between the preparation example of the acrylic copolymer component (A) and the preparation example of the curative component (B), the design molar ratio between them, the volume average particle diameter of the resulting thermosetting powder coating composition, etc. are set forth in Table 2.

Comparative Example 8 (preparation of thermosetting powder coating composition)

Into a Henschel mixer (manufactured by Mitsui Mining Co., Ltd.), 79 parts of the acrylic copolymer component (A) obtained in Preparation Example 5 and shown in Table 1, 21 parts of commercially available dodecanedioc acid (available from Ube Industries, Ltd.) prepared by chemical synthesis as the curative component (B), 2 parts of an ultraviolet light absorber Tinuvin CGL1545 (available from Ciba Specialty Chemicals K.K.), 1 part of a hindered amine light stabilizer Tinuvin CGL052 (available from Ciba Specialty Chemicals K.K.), 0.5 part of benzoin, 0.3 part of a flow additive, 0.2 part of tetrabutylphosphonium bromide and 0.1 part of N,N'-ethylenebis(stearamide) as a slipping agent were together introduced, and they were dry mixed at room temperature for 3 minutes, followed by melt blending at 110°C by the use of a single screw extruder (manufactured by Coperion). Then, operations of solidification, pulverization and sieving were performed, and finally, 0.2 part of a silica powder additive "Aerosil RX300" (available from Nippon Aerosil K.K.) was dry mixed for the purposes of ensuring sufficient powder flowability and preventing coagulation. Thus, a thermosetting powder coating composition of Comparative Example 8 was completed. The particle size of the resulting coating composition was measured by SALAD2000 manufactured by Shimadzu Corporation. As a result, the volume average particle diameter was 20 microns, and the particles were non-spherical indefinite-shaped ones having a particle size distribution. The flow additive used above was a flow additive obtained by preparing a solid homopolymer of isobutyl methacrylate having a weight-average molecular weight Mw of 12000 in accordance with Preparation Example 1 of the acrylic copolymer component (A) and pulverizing the solid homopolymer to an average particle size of 0.5 mm. The blending molar ratio of the acid group (b) in the curative component (B) to the glycidyl group (a) in the acrylic copolymer component (A) in this Comparative Example 8 was 0.9/1 (acid group (b)/glycidyl group (a)) and was designed in excess of glycidyl group. The results are all set forth in Table 2.

Evaluation of powder coatings

Evaluation of melt properties of coatings

The powder coatings prepared in the examples and the comparative examples were set in a measuring device (manufactured by Haake, model: Rheostress RS75) for measuring an absolute value of a complex elastic modulus ($\eta$*), and the absolute value of the complex elastic modulus ($\eta$*) of each coating was measured under the following conditions.
From the measured value, the time $\Delta T$ required for decrease of the absolute value of the complex elastic modulus ($\eta$*) from 100000 Pa·s to 5 Pa·s was calculated. The results are set forth in Table 3. The lowest value of the absolute value of the complex elastic modulus ($\eta$*) is also set forth in Table 3.

Conditions for measuring absolute value of complex elastic modulus ($\eta$*)

Heating rate: 10°C/min
Heating starting temperature: 60°C
Heating finish temperature: 150°C
Plate: parallel plate of 20 mm diameter
Distance between plates: 1 mm
Frequency: 1 Hz

Evaluation of powder properties of coatings

The blocking or coagulation tendency of the powder coating in storage was evaluated. In a cylindrical container having an inner diameter of 20 mm and a height of 80 mm, 6.0 g of the powder coating was placed, and the container was closed. After the powder coating was stored for 7 days at 30°C, it was taken out from the container and touched with a finger to evaluate coagulation tendency based on the following criteria (good to poor). The results are set forth in Table 3.
Good: There is no coagulation.
Fair: Although there is slight coagulation, coagulated particles are easily broken.
Poor: There are coagulated particles which are not broken even by touch with a finger.

Evaluation of film properties of coatings

The powder coating was electrostatically sprayed onto a steel plate with an undercoating film in such a manner that the thickness of the resulting coating film after baking became 40 $\mu$m, and then heated at 145°C for 30 minutes to obtain a test plate.
The steel plate with an undercoating film used herein was prepared by applying a polyester-melamine crosslinking type black solvent-borne paint in a thickness of 20 $\mu$m onto a bonderized steel plate of 0.8 mm thickness having been subjected to zinc phosphate treatment and then baking the paint at 170°C for 30 minutes. Evaluation methods are as follows. The results are all set forth in Table 3.

Appearance/visual observation smoothness

The film smoothness was visually observed and evaluated based on the following criteria (excellent to poor).
Excellent: very smooth
Good: slightly wavy
Poor: markedly wavy

Appearance/transparency (haze)

The transparency of the film was visually observed and evaluated based on the following criteria (good to poor).
Good: very transparent
Fair: slightly hazy
Poor: markedly hazy

<u>Appearance/Lw value</u>

The long wavelength value was measured by a measuring machine "Wave Scan Plus" manufactured by BYK Gardener, and the measured value is set forth in the following table.

Lower Lw value means better smoothness.

<u>Gloss value</u>

By the use of a glossmeter manufactured by BYK Gardener, a 60° gloss value and a 20° gloss value were measured.

<u>Film hardness</u>

The film hardness was evaluated by a pencil scratch test (in accordance with JIS K5400 6.14) and expressed in a pencil hardness.

<u>Scratch/mar resistance</u>

Using an aqueous slurry containing an abrasive of fixed grain size and having a concentration of 30%, rubbing treatment of 20 reciprocation motions was carried out by means of a crockmeter (manufactured by Daiei Kagaku K.K.). Then, a retention of 20° gloss value after the rubbing was calculated by using below formula 2.

$$\text{(Formula 2)}$$

$$\text{Gloss retention (\%)} = \{(20°\text{gloss value after rubbing}) \div (20°\text{gloss value before rubbing})\} \times 100$$

AA: not less than 40%
BB: not less than 20% and less than 40%
CC: less than 20%

<u>Acid resistance</u>

On the film surface, 1 cc of sulfuric acid of 10% by volume was dropped, and the film was allowed to stand for 1 day. Then, the drop of sulfuric acid was wiped off, and the film appearance was observed and evaluated based on the following criteria (good to poor).
Good: No traces are observed.
Fair: Traces are slightly observed.
Poor: Traces are clearly observed.

<u>Solvent resistance</u>

The film surface was rubbed with gauze impregnated with xylene back and forth 50 times. Then, the film was observed and evaluated based on the following criteria (good to poor).
Good: No traces are observed.
Fair: Traces are slightly observed.
Poor: Traces are clearly observed.

<u>Yellowing on heating</u>

The powder coating was hot pressed at 160°C over a period of 1 hour by means of a hot press machine using one Teflon plate having a thickness of 3 mm, two Teflon release sheets and a metal spacer having a thickness of 2.9 mm, to form a tablet free from residual bubble and having a diameter of 20 mm and a thickness of 2.9 mm. The degree of yellowing was observed on a white paper and evaluated based on the following criteria (good to poor).

Good: The tablet is almost colorless and transparent.
Fair: The tablet is slightly yellowed.
Poor: The tablet is obviously yellowed.

Out-door-durability (weatherability)

An accelerated weathering test of 2000 hours by QUV tester was carried out. Before and after the accelerated weathering test, 20° gloss of the film was measured, and a gloss retention (%) was calculated. The out-door-durability was evaluated based on the following criteria (good to poor). The gloss retention was calculated from the following formula 3.
Good: not less than 90%
Fair: less than 90%
Poor: less than 80%

(Formula 3)

$$\text{Gloss retention (\%)} = \{(20° \text{ gloss value after exposure}) \div (20° \text{ gloss value before exposure})\} \times 100$$

Table 1 (Preparation example of acrylic copolymer component (A) and properties thereof)

| Amount (part(s) by weight, total of monomers: 100) | | | Prep. Ex. 1 | Prep. Ex. 2 | Prep. Ex. 3 | Prep. Ex. 4 | Prep. Ex. 5 | Prep. Ex. 6 | Prep. Ex. 7 | Prep. Ex. 8 | Prep. Ex. 9 | Prep. Ex. 10 |
|---|---|---|---|---|---|---|---|---|---|---|---|---|
| Essential monomers | Styrene | (A-1) | 20 | 16.5 | 10 | 15 | 15 | 20 | 20 | 18 | 10 | 10 |
| | Glycidyl methacrylate | (A-2) | 40 | | 40 | 40 | 40 | 40 | 40 | 42 | 40 | 40 |
| | β-Methyl glycidyl methacrylate | | | 43.5 | | | | | | | | |
| Monomers from which at least one monomer is selected | Isobutyl methacrylate | (A-3) | | 20 | 20 | 35 | 35 | | | | 20 | 20 |
| | Cyclohexyl methacrylate | (A-4) | | | 10 | | | 20 | | | 10 | 10 |
| | Isoboronyl methacrylate | (A-5) | | 20 | 20 | | | 20 | | | 20 | 20 |
| | Isoboronyl acrylate | (A-6) | 38 | | | | | | | | | |
| | Methyl methacrylate | (A-7) | | | | 10 | 10 | | 40 | 40 | | |
| Another monomer | n-Butyl methacrylate | (A-8) | 2 | | | | | | | | | |
| Polymerization initiator | t-Butyl peroxy-2-ethylhexanoate | | 10 | 10 | 10 | 10 | 9 | 10 | 10 | 9 | 15 | 7 |
| Rosin (C) for modification | KR-85 (available from Arakawa Chemical Industries, Ltd.) | | 0 | 0 | 0 | 0 | 1 | 0 | 0 | 3 | 0 | 0 |
| Number-average molecular weight Mn | | | 1520 | 1570 | 1610 | 1520 | 1660 | 1550 | 1570 | 1670 | 1240 | 2250 |
| Weight-average molecular weight Mw | | | 3150 | 3260 | 3380 | 3310 | 3780 | 3270 | 3350 | 3850 | 2480 | 4690 |
| Design Tg (Fox's formula) | | | 75 | 76 | 76 | 65 | 65 | 82 | 77 | 76 | 76 | 76 |
| Measured Tg (DSC) | | | 36 | 37 | 38 | 34 | 37 | 39 | 38 | 38 | 30 | 46 |
| Solubility parameter (SP) | | | 9.0 | 9.1 | 9.1 | 9.3 | 9.3 | 9.4 | 10.1 | 10.2 | 9.1 | 9.1 |
| Measured epoxy equivalent weight (g/eq.) | | | 380 | 385 | 378 | 379 | 382 | 379 | 381 | 385 | 388 | 370 |

EP 1 362 899 B1

Table 2 (Preparation example of thermosetting powder coating composition)

| Components (part(s) by weight) | | Ex. 1 | Ex. 2 | Ex. 3 | Ex. 4 | Ex. 5 | Ex. 6 | Ex. 7 |
|---|---|---|---|---|---|---|---|---|
| Acrylic copolymer component (A) | Prep. Ex. 1 | 62 | | | | | | |
| | Prep. Ex. 2 | | 63 | | | | | |
| | Prep. Ex. 3 | | | 62 | | | | 65 |
| | Prep. Ex. 4 | | | | 62 | | | |
| | Prep. Ex. 5 | | | | | 63 | | |
| | Prep. Ex. 6 | | | | | | 67 | |
| | Prep. Ex. 7 | | | | | | | |
| | Prep. Ex. 8 | | | | | | | |
| | Prep. Ex. 9 | | | | | | | |
| | Prep. Ex. 10 | | | | | | | |
| Curative component (B) | Dodecanedioic acid linear polyacid anhydride — Prep. Ex. 1 | | | | | | 33 | 35 |
| | Tetradecanedioic acid linear polyacid anhydride — Prep. Ex. 2 | 38 | 37 | 38 | 38 | 37 | | |
| | Prep. Ex. 3 | | | | | | | |
| | Prep. Ex. 4 | | | | | | | |
| | Dodecanedioic acid (chemical synthesis, commercially available) | | | | | | | |
| Coating additives* | | described as notes | | | | | | |
| Acid group (b)/(β-methyl)glycidyl group (a) molar ratio | | 1.2 | 1.2 | 1.2 | 1.2 | 1.15 | 1.1 | 1.2 |
| Volume average particle diameter (μm) of coating composition | | 25 | 24 | 26 | 27 | 24 | 19 | 23 |
| Particle shape of coating composition | | Indefinite shape | Indefinite shape | Indefinite shape | Indefinite shape | Indefinite shape | Indefinite shape | Indefinite shape |

EP 1 362 899 B1

Table 2 (Preparation example of thermosetting powder coating composition)(continued)

| Components (part(s) by weight) | | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|---|
| Acrylic copolymer component (A) | | Prep. Ex. 1 | | | | | | | | |
| | | Prep. Ex. 2 | | | | | | | | |
| | | Prep. Ex. 3 | | | | | 66 | | | |
| | | Prep. Ex. 4 | | | | | | | | |
| | | Prep. Ex. 5 | | | | | | 65 | 65 | 79 |
| | | Prep. Ex. 6 | | | | | | | | |
| | | Prep. Ex. 7 | 65 | | | | | | | |
| | | Prep. Ex. 8 | | 64 | | | | | | |
| | | Prep. Ex. 9 | | | 65 | | | | | |
| | | Prep. Ex. 10 | | | | 64 | | | | |
| Curative component (B) | Dodecanedioic acid linear polyacid anhydride | Prep. Ex. 1 | 35 | | | 36 | | | | |
| | Tetradecanedioic acid linear polyacid anhydride | Prep. Ex. 2 | | 36 | 35 | | 34 | | | |
| | | Prep. Ex. 3 | | | | | | 35 | | |
| | | Prep. Ex. 4 | | | | | | | 35 | |
| | Dodecanedioic acid (chemical synthesis, commercially available) | | | | | | | | | 21 |
| Coating additives* | | | described as notes | | | | | | | |
| Acid group (b)/(β-methyl)glycidyl group (a) molar ratio | | | 1.2 | 1.15 | 1.1 | 1.2 | 1.0 | 1.05 | 1.05 | 0.9 |
| Volume average particle diameter (μm) of coating composition | | | 25 | 23 | 28 | 23 | 27 | 25 | 28 | 20 |
| Particle shape of coating composition | | | Indefinite shape | Indefinite shape | Indefinite shape | Indefinite shape | Indefinite shape | Indefinite shape | Indefinite shape | Indefinite shape |

Notes:
* Tinuvin CGL1545: 2 parts, Tinuvin CGL052: 1 part, benzoin: 0.5 part, flow additive: 0.3 part, curing catalyst: 0.2 part, slipping agent: 0.1 part

Each of the thermosetting powder coating compositions is dry mixed with 0.2 part of Aerosil RX300 (available from Nippon Aerosil K.K.) after pulverization and sieving.

Table 3 (Properties of thermosetting powder coating composition and coating film)

| Properties | | | Ex. 1 | Ex. 2 | Ex. 3 | Ex. 4 | Ex. 5 | Ex. 6 | Ex. 7 |
|---|---|---|---|---|---|---|---|---|---|
| Melt properties | Complex elastic modulus | $\Delta T$ (second(s)) | 132 | 135 | 138 | 155 | 185 | 198 | 161 |
| | | Minimum $\eta^*$ (Pa·S) | 0.3 | 0.5 | 0.5 | 0.6 | 1.1 | 1.7 | 0.8 |
| Powder properties | Blocking or coagulation tendency | | Good | Good | Good | Fair | Good | Good | Fair |
| Coating film properties | Appearance | Visual observation smoothness | Excellent | Excellent | Excellent | Excellent | Good | Good | Excellent |
| | | Transparency (haze) | Good | Good | Good | Fair | Good | Good | Good |
| | | Lw value | 2.7 | 2.9 | 2.8 | 3.1 | 4.2 | 4.5 | 3.7 |
| | Gloss (60°) | | 95 | 93 | 94 | 93 | 94 | 92 | 92 |
| | Gloss (20°) | | 89 | 88 | 88 | 85 | 90 | 88 | 88 |
| | Film hardness | | HB-F | HB-F | F | F | F | H | H |
| | Scratch/mar resistance | | AA(65) | AA(60) | AA(58) | AA(52) | AA(57) | BB(25) | BB(26) |
| | Acid resistance | | Good | Good | Good | Good | Good | Fair | Fair |
| | Solvent resistance | | Good | Good | Fair | Fair | Good | Fair | Good |
| | Yellowing on heating | | Good | Good | Good | Good | Good | Good | Good |
| | Out-foor-durability | | Good | Good | Good | Good | Good | Good | Good |

Table 3 (Properties of thermosetting powder coating composition and coating film) (continued)

| Properties | | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|---|
| Melt properties | Complex elastic modulus | ΔT (second(s)) | 261 | 256 | 148 | 248 | 214 | 210 | 201 | 259 |
| | | Minimum η* (Pa·S) | 2.5 | 2.3 | 0.8 | 3.2 | 2.9 | 2.3 | 1.9 | 3.1 |
| Powder properties | Blocking or coagulation tendency | | Fair | Fair | Poor | Fair | Good | Good | Poor | Good |
| | Appearance | Visual observation smoothness | Poor | Poor | Excellent | Poor | Poor | Poor | Poor | Poor |
| | | Transparency (haze) | Good | Good | Good | Good | Good | Poor | Fair | Good |
| | | Lw value | 7.4 | 8.3 | 3.6 | 8.1 | 6.9 | 7.9 | 5.9 | 8.9 |
| | Gloss (60°) | | 92 | 92 | 91 | 91 | 92 | 89 | 90 | 93 |
| Coating film properties | Gloss (20°) | | 88 | 88 | 87 | 88 | 88 | 84 | 86 | 89 |
| | Film hardness | | H | F | F | H | H | H | H | H |
| | Scratch/mar resistance | | BB(23) | AA(45) | BB(37) | BB(29) | BB(30) | BB(28) | BB(25) | CC(12) |
| | Acid resistance | | Fair | Fair | Poor | Fair | Fair | Fair | Fair | Poor |
| | Solvent resistance | | Fair | Fair | Poor | Fair | Fair | Fair | Fair | Poor |
| | Yellowing on heating | | Good | Good | Good | Good | Good | Poor | Good | Good |
| | Out-door-durability | | Good | Good | Fair | Good | Good | Fair | Good | Good |

According to the present invention, a thermosetting powder coating composition, which undergoes thermal curing reaction to form a crosslinked cured film excellent in appearance (smoothness, gloss, transparency, etc.), physical properties (hardness, scratch/mar resistance, etc.) and chemical properties (acid resistance, solvent resistance, etc.) and is particularly favorable for automotive top clear powder coating of thin film having a thickness of 50 to 35 $\mu$m, can be designed.

## Claims

1. A thermosetting powder coating composition containing, as essential constituents, an acrylic copolymer component (A), which is solid at ambient temperature, has a functional group capable of undergoing thermal curing reaction and has a weight-average molecular weight Mw of not less than 2500 and a design Tg, as determined by the Fox's formula, of not lower than 50°C, and a curative component (B), which has a functional group other than the functional group of the acrylic copolymer component (A) and capable of undergoing thermal curing reaction with the functional group of the component (A), wherein the time $\Delta T$ required for decrease of the absolute value of a complex elastic modulus ($\eta^*$) of said composition from 100000 Pa·s to 5 Pa·s is not more than 200 seconds, said absolute value of a complex elastic modulus being measured by a dynamic viscoelasticity measuring device under the conditions of a heating rate of 10°C/min, a heating starting temperature of 60°C, a heating finish temperature of 150°C, a plate of a parallel plate having a diameter of 20 mm, a distance between plates of 1 mm and a frequency of 1 Hz, wherein the acrylic copolymer component (A) having a functional group is obtained by copolymerizing 10 to 40 parts by weight of styrene (A-1) as an essential component, 30 to 60 parts by weight of glycidyl methacrylate and/or $\beta$-methyl glycidyl methacrylate (A-2) as an essential component, at least one monomer selected from 0 to 50 parts by weight of isobutyl methacrylate (A-3), 0 to 50 parts by weight of cyclohexyl methacrylate (A-4), 0 to 45 parts by weight of isobornyl methacrylate (A-5), 0 to 40 parts by weight of isobornyl acrylate (A-6) and 0 to 20 parts by weight of methyl methacrylate (A-7), as another ethylenically unsaturated monomer, and 0 to 5 parts by weight of an ethylenically unsaturated monomer (A-8) other than the above monomers, with the proviso that the total amount of the components (A-1) to (A-8) is 100 parts by weight, and
the curative component (B) is dodecanedioic acid linear polyacid anhydride or tetradecanedioic acid linear polyacid anhydride, which is obtained by intermolecular dehydrocondensation of a dibasic acid prepared from a normal paraffin mixture mainly containing a fraction of 12 carbon atoms or a fraction of 14 carbon atoms respectively through a fermentation process and containing not less than 90% by weight of a linear dibasic acid of the corresponding number of carbon atoms, and which has a residual nitrogen concentration of not more than 150 ppm and an ash concentration of not more than 1000 ppm, and an acid group (b) as the total amount of the both-end carboxyl group and the acid anhydride group in the curative component (B) is contained in excess to a glycidyl group (a) in the copolymer component (A) in a molar ratio ((b)/(a)) of 1.05-1.3/1.0.

2. The thermosetting powder coating composition as claimed in claim 1, wherein a part of ($\beta$-methyl)glycidyl groups of the acrylic copolymer component (A) have been previously graft-modified with rosin (C) having a carboxyl group and having a melting point of not lower than 45°C in such a manner that the weight ratio of the rosin (C) to the acrylic copolymer component (A) becomes 0.01 to 3%.

3. A method for forming a cured clear film, comprising using the thermosetting powder coating composition of claim 1 or 2 as a composition substantially containing no pigment for coloration in order not to impair transparency, mechanically pulverizing the composition to prepare non-spherical indefinite-shaped particles having a volume average particle diameter of not less than 18 $\mu$m, and subjecting the particles to heating and baking.

4. An automotive top clear powder coating film, which is obtained by the method of claim 3, is substantially formed by thermal curing reaction of glycidyl group with acid group and has a smoothness Lw value, which is a long wavelength value measured by a measuring machine "Wave Scan Plus" manufactured by BYK Gardener on the portion having a film thickness of not more than 50 $\mu$m, of not more than 4.0.

## Patentansprüche

1. Wärmehärtbare Pulverbeschichtungszusammensetzung, die als wesentliche Bestandteile enthält: eine bei Umgebungstemperatur feste Acrylcopolymerkomponente (A), die eine zum Durchlaufen einer Wärmehärtungsreaktion befähigte funktionale Gruppe aufweist und ein Gewichtsmittel des Molekulargewichts Mw von nicht weniger als 2500 sowie eine ausgelegte Tg (design Tg), bestimmt mit der Fox-Formel, von nicht weniger als 50°C aufweist, und eine härtende Komponente (B), welche eine andere funktionale Gruppe als die funktionale Gruppe der Acrylcopolymerkomponente (A) aufweist, die befähigt ist, mit der funktionalen Gruppe der Komponente (A) eine Wärmehärtungsreaktion zu durchlaufen, wobei die zur Verminderung des Absolutwerts eines komplexen Elastizitätmoduls ($\eta^*$) der Zusammensetzung von 100000 Pa.s auf 5 Pa.s benötigte Zeit $\Delta T$ nicht mehr als 200 Sekunden beträgt, wobei der Absolutwert eines komplexen Elastizitätsmoduls mittels einer dynamischen Elastizitätsmessvorrichtung unter Bedingungen einer Heizgeschwindigkeit von 10°C/min., einer Heizbeginntemperatur von 60°C, einer Heizendtemperatur von 150°C, einer Platte paralleler Platten mit einem Durchmesser von 20 mm, einem Abstand zwischen den Platten von 1 mm und einer Frequenz von 1 Hz gemessen wird, wobei

die Acrylcopolymerkomponente (A) mit einer funktionalen Gruppe durch Copolymerisieren von 10 bis 40 Gew.-Teilen Styrol (A-1) als wesentlicher Komponente, 30 bis 60 Gew.-Teilen Glycidylmethacrylat und/oder (β-Methyl)glycidylmethacrylat (A-2) als wesentlicher Komponente, mindestens eines Monomers, ausgewählt aus 0 bis 50 Gew.-Teilen Isobutylmethacrylat (A-3), 0 bis 50 Gew.-Teilen Cyclohexylmethacrylat (A-4), 0 bis 45 Gew.-Teilen Isobornylmethacrylat (A-5), 0 bis 40 Gew.-Teilen Isobornylacrylat (A-6) und 0 bis 20 Gew.-Teilen Methylmethacrylat (A-7) als anderem ethylenisch ungesättigten Monomer sowie 0 bis 5 Gew.-Teilen eines anderen ethylenisch ungesättigten Monomers (A-8) als den obigen Monomeren, erhalten wird, mit der Maßgabe, dass die Gesamtmenge der Komponenten (A-1) bis (A-8) 100 Gew.-Teile beträgt, und

die härtende Komponente (B) lineares Dodecandisäure-Polysäureanhydrid oder lineares Tetradecandisäure-Polysäureanhydrid ist, welche durch intermolekulare Dehydrokondensation einer zweiwertigen Säure erhalten wird, die mittels eines Fermentationsverfahrens aus einem normalen Paraffingemisch hergestellt wird, welches hauptsächlich eine Fraktion von 12 Kohlenstoffatomen oder eine Fraktion von 14 Kohlenstoffatomen enthält und nicht weniger als 90 Gew.-% einer linearen zweiwertigen Säure der entsprechenden Zahl von Kohlenstoffatomen enthält, und welche eine Reststickstoffkonzentration von nicht mehr als 150 ppm und eine Aschekonzentration von nicht mehr als 1000 ppm aufweist, wobei eine Säuregruppe (b) als Gesamtmenge der Carboxylgruppen beider Enden und der Säureanhydridgruppe in der härtenden Komponente (B) in einem Überschuss zu einer Glycidylgruppe (a) in der Copolymerkomponente (A) bei einem Molverhältnis ((b)/(a)) von 1,05-1,3/1,0 enthalten ist.

2. Wärmehärtbare Pulverbeschichtungszusammensetzung nach Anspruch 1, wobei ein Teil der (β-Methyl)glycidylgruppen der Acrylcopolymerkomponente (A) zuvor mit Colophonium, welches eine Carboxylgruppe und einen Schmelzpunkt von nicht kleiner als 45°C aufweist, derart pfropfmodifiziert wurde, dass das Gewichtsverhältnis des Colophonium (C) zur Acrylcopolymerkomponente (A) 0,01 bis 3 % wird.

3. Verfahren zur Bildung eines gehärteten klaren Films, umfassend Verwenden der wärmehärtbaren Pulverbeschichtungszusammensetzung nach Anspruch 1 oder 2 als Zusammensetzung, die im wesentlichen kein Pigment zum Färben enthält, um die Transparenz nicht zu beeinträchtigen, mechanisches Zerkleinern der Zusammensetzung, um nicht-kugelförmige, undefiniert geformte Teilchen mit einem Volumenmittel des Teilchendurchmessers von nicht weniger als 18 μm herzustellen, und Unterziehen der Teilchen einem Erhitzen und Backen.

4. Klarer Automobildach-Pulverbeschichtungsfilm, der durch das Verfahren nach Anspruch 3 erhalten wird, im wesentlichen gebildet durch eine Wärmehärtungsreaktion von Glycidylgruppen mit Säuregruppen, und der einen Glättewert Lw, welches ein Langwellenlängenwert ist, gemessen an einem Bereich mit einer Filmdicke von nicht mehr als 50 μm mittels einer Messvorrichtung "Wave Scan Plus", hergestellt von BYK Gardener, von nicht mehr als 4,0 aufweist.

## Revendications

1. Composition de revêtement en poudre thermodurcissable contenant, comme constituants essentiels, un composant copolymère acrylique (A), qui est solide à température ambiante, qui a un groupe fonctionnel capable d'effectuer une réaction de durcissement thermique et qui a une masse moléculaire moyenne en poids de pas moins de 2500 et une Tg de conception, déterminée par la formule de Fox, qui n'est pas inférieure à 50°C, et un composant durcisseur (B), qui a un groupe fonctionnel autre que celui du composant copolymère acrylique (A); **caractérisée en ce que** le temps $\Delta T$ nécessaire pour diminuer la valeur absolue du module élastique complexe ($\eta^*$) de ladite composition de 100.000 Pa.s à 5 Pa.s n'est pas supérieur à 200 secondes, ladite valeur absolue d'un module élastique complexe ($\eta^*$) étant mesurée à l'aide d'un appareil de mesure de viscoélasticité dynamique dans les conditions de vitesse de chauffage de 10°C/minute, de température de début de chauffage de 60°C, de température de fin de chauffage de 150°C, ayant une plaque de plateaux parallèles de 20 mm de diamètre, de distance entre plateaux de 1 mm et une fréquence de 1 Hz, **caractérisée en ce que** le composant copolymère acrylique (A), qui a un groupe fonctionnel est obtenu par copolymérisation de 10 à 40 parties en poids de styrène (A-1), comme un composant essentiel, de 30 à 60 parties en poids de méthacrylate de glycidyle et/ou de méthacrylate de (β-méthyl glycidyle) (A-2), comme un composant essentiel, d'au moins un monomère choisi parmi 0 à 50 parties en poids de méthacrylate d'isobutyle (A-3), 0 à 50 parties en poids de méthacrylate de cyclohexyle (A-4), 0 à 45 parties en poids de méthacrylate d'isobornyle (A-5), 0 à 40 parties en poids d'acrylate d'isobornyle (A-6), et 0 à 20 parties en poids de méthacrylate de méthyle (A-7), comme autre monomère à insaturation éthylénique, et 0 à 5 parties en poids d'un monomère à insaturation éthylénique (A-8) autre que les monomères ci-dessus, à la condition que la quantité totale des composants (A-1) à (A-8) soit 100 parties en poids, et

le composant durcisseur (B) est un anhydride d'un polyacide linéaire d'acide dodécanedioïque ou un anhydride d'un polyacide linéaire d'acide tétradécanedioïque, qui est obtenu par une condensation déshydratante intermoléculaire d'un diacide préparé à partir d'un mélange de paraffines normales contenant principalement respectivement une fraction à 12 atomes de carbone ou une fraction à 14 atomes de carbone par un procédé de fermentation et contenant pas moins de 90 % en poids d'un diacide linéaire du nombre d'atomes de carbone correspondant, et qui a une concentration en azote résiduel de pas plus de 150 ppm et une concentration en cendres de pas plus de 1000 ppm, et un groupe acide (b) en tant que quantité totale du groupe carboxylique aux deux extrémités et du groupe anhydride d'acide dans le composant durcisseur (B) est contenu en excès par rapport à un groupe glycidyle (a) dans le composant polymère (A) dans un rapport molaire ((b)/(a)) de 1,05-1,3/1,0.

2. Composition de revêtement en poudre thermodurcissable selon la revendication 1, **caractérisée en ce qu'**une partie des groupes (β-méthyl)glycidyle du composant copolymère acrylique (A) a préalablement été modifiée par greffage avec de la colophane (C) ayant un groupe carboxylique et ayant un point de fusion pas inférieur à 45°C de telle sorte que le rapport pondéral de colophane (C) sur le composant copolymère acrylique (A) devienne 0,01 à 0,3 %.

3. Procédé de formation d'un film durci transparent, comprenant l'utilisation de la composition de revêtement en poudre thermodurcissable selon les revendication 1 et 2, en tant que composition ne contenant pas de façon substantielle un pigment pour coloration de façon à ne pas diminuer la transparence, la pulvérisation mécanique de la composition pour préparer des particules de forme indéfinie ayant un diamètre volumique moyen de particules pas inférieur à 18 $\mu$m, et la soumission des particules au chauffage et à la cuisson.

4. Film de revêtement en poudre transparent pour toit d'automobile, qui est obtenu par le procédé de la revendication 3, qui est formé de façon substantielle par une réaction thermique de durcissement du groupe glycidyle avec le groupe acide, qui a une valeur Lw de caractère lisse; qui est une valeur à grande longueur d'onde mesurée à l'aide d'une machine de mesure "Wave Scan Plus" fabriquée par BYK Gardener, sur la partie ayant une épaisseur de film de pas plus de 50 $\mu$m, de pas plus de 4,0.